# EUROPÄISCHE PATENTSCHRIFT

(11) **EP 2 386 600 B1**
(45) Veröffentlichungstag und Bekanntmachung des Hinweises auf die Patenterteilung: **19.06.2013**
(21) Anmeldenummer: 10290204.6
(22) Anmeldetag: 15.04.2010
(51) Int. Cl.: C08K 5/29, C08K 5/34, C08C 19/38, C08L 15/00

(54) **Isocyanatgruppen-enthaltende Vernetzer für Nitrilkautschuke**
Cross-linking agent for nitrile rubbers containing isocyanate groups
Réseau contenant des groupes d'isocyanates pour caoutchoucs nitriles

(43) Veröffentlichungstag der Anmeldung: 16.11.2011
(73) Patentinhaber: LANXESS Deutschland GmbH, 51369 Leverkusen (DE)
(72) Erfinder: Klimpel, Michael, Dr., 40764 Langenfeld (DE); Brandau, Sven, Dr., 67000 Strasbourg (FR); Magg, Hans, Dr., 51515 Kürten (DE)

(56) Entgegenhaltungen:
- EP-A1- 1 600 485
- EP-A2- 0 001 092
- EP-A2- 0 136 898
- WO-A1-03/076537
- WO-A1-2004/011536
- WO-A1-2004/033573

## Beschreibung

Die Erfindung betrifft die Verwendung spezieller mindestens zwei Isocyanatgruppen aufweisender Verbindungen als Vernetzer für Hydroxylgruppen-haltige (H)NBR-Kautschuke, entsprechende vulkanisierbare Zusammensetzungen, Verfahren zu deren Herstellung, Verfahren zur Herstellung von Vulkanisaten daraus und die so erhaltenen Vulkanisate.

Unter Nitrilkautschttken, abgekürzt auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt. Unter hydrierten Nitrilkautschuken ("HNBR") werden entsprechende Co- oder Terpolymere verstanden, bei denen die C=C-Doppelbindungen der einpolymerisierten Dien-Einheiten ganz oder teilweise hydriert sind. Die Bezeichnung (H)NBR umfasst sowohl NBR als auch HNBR.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit, einer hervorragenden Beständigkeit gegen Ozon und Chemikalien, wobei letztere im Fall des HNBR noch ausgeprägter als beim NBR sind. NBR und HNBR weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Dichtungen, Schläuchen, Riemen und Dämpfungselementen im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus. Kommerziell erhältlich sind eine Vielzahl unterschiedlicher Typen, die sich je nach Anwendungsbereich durch unterschiedliche Monomere, Molekulargewichte, Polydispersitäten sowie mechanische und physikalische Eigenschaften auszeichnen. Neben den Standardtypen werden vor allem Spezialtypen, die sich durch Gehalte spezieller Termonomere oder besondere Funktionalisierungen zunehmend nachgefragt.

Im praktischen Einsatz der (H)NBR Kautschuke kommt dabei auch der Vulkanisation der Kautschuke, d.h. insbesondere dem Vernetzersystem und den Vulkanisationsbedingungen, eine wachsende Bedeutung zu. So wurden neben den bereits seit vielen Jahrzehnten existierenden klassischen Kautschuk-Vernetzungssystemen auf Basis von Peroxiden bzw. Schwefel in den letzten Jahren diverse neue Konzepte zur alternativen Veinetzung entwickelt. Derartige Vernetzungskonzepte beziehen auch Polymere mit ein, die aufgrund funktioneller Gruppen nicht allen Vernetzungsformen und -agentien zugänglich sind und daher eine besondere Herausforderung darstellen.

Großtechnisch werden Nitrilkautschuke fast ausschließlich durch sogenannte Emulsionspolymerisation hergestellt. Zur Regelung des Molekulargewichts und damit auch der Viskosität des entstehenden Nitrilkautschuks werden dabei i.d.R. Dodecylmercaptane, insbesondere Tertiärdodecylmercaptane ("TDDM") eingesetzt. Nach der Polymerisation wird der erhaltene NBR-Latex in einem ersten Schritt koagulieil und daraus der NBR-Feststoff isoliert. Sofern eine weiterführende Hydrierung des Nitrilkautschuks zum HNBR gewünscht ist, erfolgt diese Hydrierung ebenfalls nach bekannten Methoden des Standes der Technik, beispielsweise unter Einsatz homogener oder auch heterogener Hydrierkatalysatoren. Die Katalysatoren basieren üblicherweise auf Rhodium, Ruthenium oder Titan. Es können aber auch Platin, Iridium, Palladium, Rhenium, Ruthenium, Osmium, Kobalt oder Kupfer entweder als Metall oder aber bevorzugt in Form von Metallverbindungen eingesetzt werden.

In großtechnischem Maßstab werden derartige Hydrierreaktionen von NBR zum HNBR üblicher Weise in homogener Phase, d.h. in einem organischen Lösungsmittel durchgeführt. Geeignete Katalysatoren und Lösungsmittel hierfür sind beispielsweise aus DE-A 25 39 132 und EP-A 0 471 250 bekannt. Insbesondere der sogenannte Wilkinson-Katalysator hat sich für eine selektive Hydrierung der Nitrilkautschuke in Monochlorbenzol als organischem Lösungsmittel bewährt. Um diese Hydrierung in einem organischem Medium durchzuführen, muss somit der nach der Polymerisation in wässriger Emulsion erhaltene Nitrilkautschuk zunächst isoliert werden. Dies ist verfahrenstechnisch und apparativ aufwändig und damit auch wirtschaftlich nicht uneingeschränkt attraktiv.

Hinzukommt, dass im Verlauf der Hydrierung von Nitrilkautschuken ein ganz erheblicher Anstieg der Viskosität (üblicherweise um einen Faktor von 2 oder mehr) zu beobachten ist (der sogenannte Mooney-Sprung). Aus diesem Grund müssen Nitrilkautschuke unter Umständen vor der Hydrierung in einem weiteren Schritt einem Molekulargewichtsabbau (z.B. durch Metathese) unterzogen werden, um letztendlich einen hydrierten Nitrilkautsclutk mit nicht zu hohem Molekulargewicht, respektive nicht zu hoher Viskosität erhalten zu können. Auf den bisher bekannten und großtechnisch umsetzbaren Synthesewegen sind auch den Möglichkeiten zur Beeinflussung der Polydispersität in gewissem Maß Grenzen gesetzt.

Die Vernetzung Hydroxylgruppen-haltiger Nitrilkautschuke mit Diisocyanaten ist an sich bekannt. Die US 3,551,472 betrifft flüssige Hydroxyl-terminierte NBR-Kautschuke. Dabei werden zunächst Carboxyl-terminierte NBR-Kautschuke hergestellt, die nachfolgend mit überschüssigem 1,4-Butandiol umgesetzt werden. Der erhaltene Kautschuk kann mit monomerem Toluoldiisocyanat weiter umgesetzt werden und soll vorteilhafte Klebeeigenschaften aufweisen.

Die JP 55-151017**,** angemeldet am 15.05.1979 (Anmeldenummer 54-56800) betrifft einen Nitrilkautschuk, der Hydroxylgruppen aufweist. Es wird beschrieben, dass dieser Kautschuk mit monomeren Diisocyanaten vernetzt werden kann. Dabei wird beispielsweise bei der Vernetzung mit 2,4-Toluylendiisocyanat als Katalysator Dibutylzinndilaurat eingesetzt.

Der Einsatz zinnhaltiger Katalysatoren führt zu einer Schwermetallbelastung des Nitrilkautschuks und macht die Handhabung der Kautschukzusammensetzung wesentlich schwieriger.

Die eingesetzten monomeren Diisocyanate sind durch ihren geringen Dampfdruck und ihre niedrige Funktionalität nur schwer zu verarbeiten, beziehungsweise in die Nitrilkautschukzusammensetzungen einzuarbeiten.

**Aufgabe der vorliegenden Erfindung** war somit die Bereitstellung von Vernetzern für Hydroxylgruppen-haltige (H)NBR-Kautschuke, die die Nachteile der bestehenden Vernetzer verneiden. Sie sollen insbesondere ohne Einsatz von zinnhaltiger Katalysatoren zur Vernetzung eingesetzt werden können und vorzugsweise einen hohen Dampfdruck und eine hohe Funktionalität aufweisen.

Die als Vernetzer eingesetzten Chemikalien sollten ferner eine gute Handhabbarkeit und eine geringe Toxizität aufweisen. Die damit vernetzten, optional hydrierten Nitrilkautschuke sollen vorzugsweise gute bis sehr gute Werte im Druckverformungstest sowie im Zugdehnungstest liefern, ein gutes bis sehr gutes Vulkanisationsverhalten (gemessen üblicherweise in einem MDR Rotations-Vulkameter) aufweisen und somit eine Alternative zu den herkömmlichen Systemen bieten.

**Die Aufgabe wird erfindungsgemäß gelöst** durch die Verwendung von Verbindungen der allgemeinen Formel (I) als Vernetzer für hydroxylgruppen-haltige (H)NBR Kautschuke, 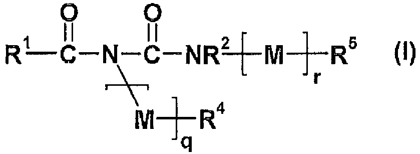 worin
- R¹: O-[M]ₚ-R³, NH-[M]ₚ-R³
- R²: H
oder R¹ und R² gemeinsam eine Einfachbindung oder eine der folgenden Gruppen 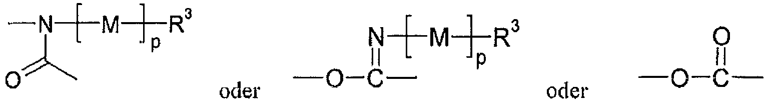 ergeben,

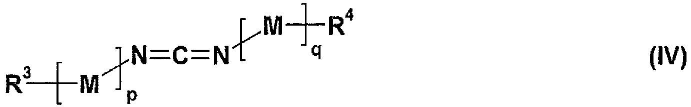

R³, R⁴, R⁵ gleich oder verschieden sind und H oder einen Rest bedeuten, der eine oder mehrere der nachfolgenden Gruppen enthält,
einen gesättigten, ein- oder mehrfach ungesättigten Carbo- oder Heterocyclylrest, geradkettiges oder verzweigtes Alkyl, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Sulfanyl, Hydroperoxycarbonyl, Hydroperoxy, Thiocarboxy, Dithiocarboxy, Hydroxyimino, Nitro, Nitrosyl, Carbonyl, Carboxy, Oxycarbonyl, Oxysulfonyl, Oxo, Thioxo, Borat, Selenat, Epoxy, Cyanat, Thiocyanat, Isocyanat, Thioisocyanat oder Isocyanid,
- **M**: für Wiederholungseinheiten eines oder mehrerer, ein- oder mehrfach ungesättigter Monomeren, umfassend konjugierte oder nicht-konjugierte Diene, Alkine und Vinylverbindungen, steht oder für ein divalentes Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide, und
**p, q, r,** gleich oder verschieden sind und im Bereich von 0 bis 10.000 liegen,
und wobei die Verbindungen der allgemeinen Formel (I) jeweils mindestens zwei Isocyanatgruppen enthalten und mindestens eine Allophanat-, Bittret-, Uretdion-, Isocyanurat-, Iminooxadiazindion-, verbrückte Carbamat-, Oxadiazintrion-, Uretonimin- oder Carbodiimid-Struktur aufweise und wobei der (H)NBR-Kautschuk Wiederholungseinheiten, abgeleitet von mindestens einem konjugierten Dien, mindestens einem α,β-ungesättigten Nitril, mindestens einem copolymerisierbaren Hydroxylgruppen-haltigen Monomer und gegebenenfalls einem oder mehreren weiteren copolymerisierbaren Monomeren aufweist und die C=C Doppelbindungen im Fall des HNBR ganz oder teilweise hydriert sind, dadurch gekennzeichnet, dass im (H)NBR-Kautschuk das copolymerisierbare Hydroxylgruppen-haltige Monomer ausgewählt ist aus der Gruppe bestehend aus Hydroxyalkyl(meth)acrylaten.

Die Formulierung, dass in den Verbindungen der allgemeinen Formel (I) jeweils "mindestens zwei Isocyanatgruppen" enthalten sind, bedeutet im Rahmen dieser Anmeldung, dass es sich dabei entweder um mindestens zwei freie Isocyanatgruppen (-NCO) oder aber um geschützte Isocyanatgruppen handelt, aus denen unter den Vernetzungsbedingungen in-sittt die -NCO Gruppen freigesetzt werden.

In einer bevorzugten Ausführungsform sind die mindestens zwei Isocyanatgruppen in den Verbindungen der allgemeinen Formel (I) in mindestens zwei der Reste R³, R⁴ bzw. R⁵ enthalten.

Besonders bevorzugt handelt es sich bei den Verbindungen der allgemeinen Formel (I) um Dimere oder Trimere von monomeren Diisocyanaten.

Die erfindungsgemäßen Vernetzer weisen den Vorteil auf, dass sie in Abwesenheit zinnhaltiger Verbindungen eingesetzt werden können und zu einer guten Vernetzung der Hydroxylgruppen-haltigen (H)NBR-Kautschuke führen.

**Gegenstand der Erfindung** ist ferner eine vulkanisierbare Zusammensetzung, enthaltend mindestens einen Hydroxylgruppen-haltigen (H)NBR-Kautschuk und mindestens einen Vernetzer, wie er vor- bzw. nachstehend definiert ist.

**Gegenstand der Erfindung** ist auch ein Verfahren zur Herstellung dieser vulkanisierbaren Zusammensetzungen durch Vermischen mindestens eines Hydroxylgruppen-haltigen (H)NBR-Kautschuks und mindestens eines Vernetzers wie vor- bzw. nachstehend definiert.

**Gegenstand der Erfindung** ist darüberhinaus ein Verfahren zur Herstellung von Vulkanisaten, bei dem die vorstehenden vulkanisierbaren Zusammensetzungen unter Erwärmen vernetzt werden, sowie die Vulkanisate, bevorzugt Formteile, die nach diesem Verfahren erhältlich sind.

Es wurde gefunden, dass durch die erfindungsgemäße Verwendung der Verbindungen der allgemeinen Formel (I), insbesondere der Dimere oder Trimere von monomeren Diisocyanaten, ein thermisch stabiles Netzwerk mit dem Hydroxylgruppen-haltigen optional hydrierten Nitrilkautschuken aufgebaut werden kann und man für eine gute Vernetzung keine Zinnverbindungen oder Schwermetallverbindungen als weiteren Venetzungskatalysator benötigt. Die eingesetzten Verbindungen der allgemeinen Formel (I) können zudem einfach gehandhabt werden. Die hergestellten Vulkanisate zeigen sehr gute Werte im Druckverformungstest bei Raumtemperatur und 100°C und des weiteren eine hohe Zugspannung bei guten Bruchdehnungen. Insbesondere bei Verwendung von HEMA (Hydroxyethylmethacrylat) als Hydroxyl-haltigem Termonomer im optional hydrierten Nitrilkautschuk lassen sich sehr gute Ergebnisse erzielen.

Die erfindungsgemäß einzusetzenden Verbindungen der allgemeinen Formel (I) besitzen mindestens eine Allophanat-, Biuret-, Uretdion-, Isocyanurat-, Iminooxa-diazindion-, verbrückte Carbamat-, Oxadiazintrion-, Uretonimin- oder Carbodiimid- Struktur.

Als Verbindungen der allgemeinen Formel (1) sind die folgenden Verbindungen der allgemeinen Strukturen (I-1) bis (1-6) geeignet,

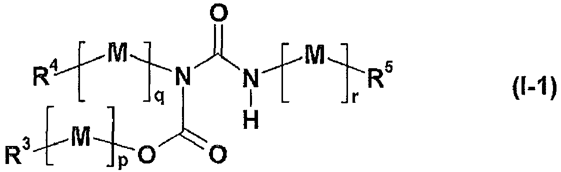

(Die Verbindung der Struktur (I-1) stellt ein Allophanat dar und ergibt sich aus der allgemeinen Formel (I), wenn R¹ = O-[M]ₚ-R³, wobei R³, R⁴ und R⁵ in Summe mindestens zwei NCO-Gruppen enthalten müssen.) 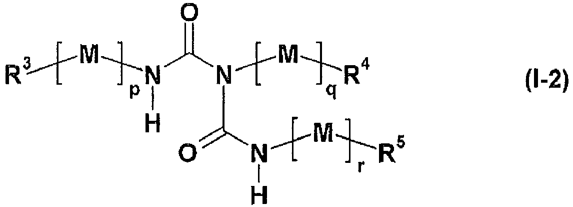 (Die Verbindung der Struktur (I-2) stellt ein Biuret dar und ergibt sich aus der allgemeinen Formel (I), wenn R¹ = NH-[M]ₚ-R³, wobei R³, R⁴ und R⁵ in Summe mindestens zwei NCO-Gruppen enthalten müssen.) 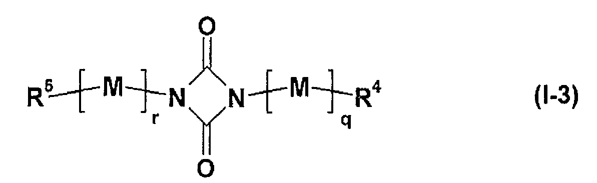 (Die Verbindung der Struktur (I-3) stellt ein Uretdion dar und ergibt sich aus der allgemeinen Formel (I), wenn R¹ und R² zusammen eine Einfachbindung bilden, wobei R⁴ und R⁵ in Summe mindestens zwei NCO-Gruppen enthalten müssen.) 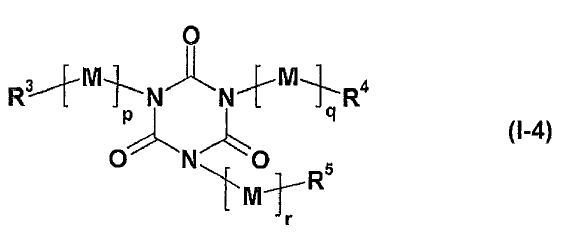 (Die Verbindung der Struktur (I-4) stellt ein Isocyanurat dar und ergibt sich aus der allgemeinen Formel (I), wenn R¹ eine Gruppe 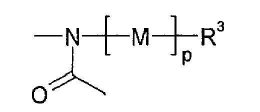 darstellt, wobei R³, R⁴ und R⁵ in Summe mindestens zwei NCO-Gruppen enthalten müssen.) 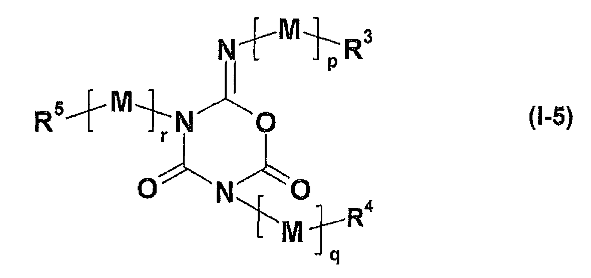 (Die Verbindung der Struktur (I-5) stellt ein Iminooxadiazindion dar und ergibt sich aus der allgemeinen Formel (I), wenn R¹ eine Gruppe 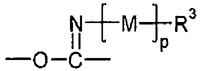 darstellt, wobei R³, R⁴ und R⁵ in Summe mindestens zwei NCO-Gruppen enthalten müssen.)

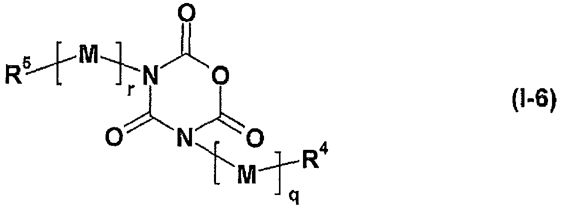

(Die Verbindung der Struktur (I-6) stellt ein Oxadiazintrion dar und ergibt sich aus der allgemeinen Formel (I), wenn R¹ eine Gruppe (-O-C(=O)-) darstellt, wobei R⁴ und R⁵ in Summe mindestens zwei NCO-Gruppen enthalten müssen.)
wobei in den Formeln (I-1) bis (I-6) R³, R⁴ und R⁵ gleich oder verschieden sind und H oder einen Rest bedeuten, der eine oder mehrere der nachfolgenden Gruppen enthält,
einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroalyloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Sulfonyl, Hydroperoxycarbonyl, Hydroperoxy, Thiocarboxy, Dithiocarboxy, Hydroxyimino, Nitro, Nitrosyl, Carbonyl, Carboxy, Oxycarbonyl, Oxysulfonyl, Oxo, Thioxo, Borat, Selenat, Epoxy, Cyanat, Thiocyanat, Isocyanat, Thioisocyanat oder Isocyanid,
**M** für Wiederholungseinheiten eines oder mehrerer, ein- oder mehrfach ungesättigter Monomeren, umfassend konjugierte oder nicht-konjugierte Diene, Alkine und Vinylverbindungen, oder für ein divalentes Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide und
**p, q, r,** sind gleich oder verschieden und liegen jeweils im Bereich von 0 bis 10.000.

Es ist ferner möglich, dass die vorgenannten Strukturen (I-1) bis (1-6) auch mehrmals im Molekül vorkommen und dann über verbrückende (Di-, Tri- oder Polyisocyanat)-Strukturelemente verbunden sind.

Soweit in dieser Anmeldung der Begriff "substituiert" verwendet wird, so bedeutet dies, dass ein Wasserstoff-Atom an einem angegebenen Rest oder Atom durch eine der angegebenen Gruppen ersetzt ist, mit der Maßgabe, dass die Wertigkeit des angegebenen Atoms nicht überschritten wird und immer nur unter der Bedingung, dass diese Substitution zu einer stabilen Verbindung führt.

Die für die Reste R³, R⁴, R⁵ in der allgemeinen Formel (I) genannten Bedeutungen können jeweils ein- oder mehrfach substituiert sein. Bevorzugt sind die folgenden Reste ein- oder mehrfach substituiert: Alkyl, Carbocyclyl, Heterocyclyl, Aryl, Heteroaryl, Aryl-alkyl, Heteroarylalkyl, Alkoxy, Aryloxy, Alkylthio, Arylthio, Amino, Amido, Carbamoyl, Phos-phonato, Phosphinato, Sulfanyl, Thiocarboxy, Sulfinyl, Sulfono, Sulfino, Sulfeno, Sulfamoyl, Silyl, Silyloxy, Carbonyl, Carboxy, Oxycarbonyl, Oxysulfonyl, Oxo, Thioxo, Borat, Selenat und Epoxy.

Als Substituenten kommen dabei - soweit sich chemisch stabile Verbindungen ergeben - alle Bedeutungen in Frage, die R³, R⁴, R⁵ annehmen kann. Besonders geeignet als Substituenten sind Halogen, bevorzugt Fluor, Chlor, Brom oder Iod, Nitril (CN) und Carboxy.

Die für R¹, R², R³, R⁴ und R⁵ in der allgemeinen Formel (I) und (1-1) bis (I-6) genannten Bedeutungen schließen explizit auch Salze der genannten Verbindungen von R¹ - R⁵ ein, soweit diese chemisch möglich und stabil sind. Hierbei kann es sich beispielsweise um Ammonium-Salze, Alkali-Salze, Erdalkali-Salze, Aluminium-Salze oder um protonierte Formen der Verbindungen der allgemeinen Formeln (I) bis (IV) und (I-1) bis (1-6) handeln.

Die für R¹, R², R³, R⁴ und R⁵ in der allgemeinen Formel (I) genannten Bedeutungen schließen auch Verbindungen von R¹, R², R³, R⁴ und R⁵ mit organometallischen Resten ein, beispielsweise solche, die der jeweiligen Verbindung eine Grignard Funktion verleihen. R¹, R², R³, R⁴ bzw. R⁵ kann ferner ein Carbanion darstellen bzw. aufweisen, mit Lithium, Zink, Zinn, Aluminium, Blei und Bor in entsprechend äquivalenter Form als Gegenion.

Es ist ferner möglich, dass R¹, R², R³, R⁴ bzw. R⁵ über einen Linker an eine Festphase oder Trägersubstanz angekoppelt ist. Bei dein Linker kann es sich um dem Fachmann bekannten Wang-, Sasrin-, Rink-Säure-, 2-Chlortrityl-, Mannich-, Safety-Catch-, Traceless- oder photolabile Linker handeln. Als Festphasen oder Trägersubstanzen kommen beispielsweise Silica, Ionenaustauscherharze, Tone (Clay), Montmorillonite, vernetztes Polystyrol, Polyethylenglykol gepropft auf Polystyrol, Polyacrylamide ("Pepsyn"), Polyethylenglykol-Acrylamid-Copolymere (PEGA), Cellulose, Baumwolle und gekörntes poröses Glas (CPG, controlled pore glass) in Frage.

Es ist ferner möglich, dass die Verbindungen der allgemeinen Formeln (I) bzw. (I-1) bis (1-6) als Liganden für metallorganische Komplexverbindungen fungieren, z.B, für solche auf Basis der Zentralmetalle Rhodium, Ruthenium, Titan Platin, Iridium, Palladium, Rhenium, Ruthenium, Osmium, Kobalt Eisen oder Kupfer.

Die oben genannten Bedeutungen für den Rest "M" können ein- oder mehrfach substituiert sein. Somit kann es sich bei M um Wiederholungseinheiten eines oder mehrerer, einfach oder mehrfach ungesättigter Monomere handeln, bevorzugt von optional ein- oder mehrfach substituierten konjugierten oder nicht-konjugierten Dienen, optional ein- oder mehrfach substituierten Alkinen oder optional ein- oder mehrfach substituierten Vinylverbindungen, beispielsweise fluorierten ein- oder mehrfach ungesättigten Vinylverbindungen, oder aber um ein divalentes Strukturelement, welches sich ableitet von substituierten oder unsubstituierten Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide.

Die Reste **"M"** können somit monomere oder polymere Reste sein.

Dabei enthalten die Reste R¹, R², R³, R⁴, R⁵ in Summe zwei oder mehr Isocyanatgruppen für eine Vernetzung. Diese können alternativ auch mit einer Schutzgruppe, wie dem Fachmann bekannt, geschützt sein, welche während oder vor der Vulkanisation (im letzteren Fall aber bereits nach Mischung mit dem hydroxygruppenhaltigen (H)NBR) durch ein dem Fachmann bekannten Verfahren entfernt wird. R¹ - R⁵ können, müssen aber nicht unterschiedliche Gruppen sein.

Die Herstellung entsprechender Verbindungen der allgemeinen Formeln (I) ist dem Fachmann an sich bekannt und kann beispielsweise gemäß der in EP 1 422 223 A1 beschriebenen Vorgehensweise unter Verwendung von phosphinhaltigen Katalysatorsystemen erfolgen. Die Verbindungen der allgemeinen Formeln (I) können ferner nach Methoden hergestellt werden, welche in EP 1 521 789 A1 (unter Anwendung 1,2,3- bzw. 1,2,4-Triazolaten als Katalysatoren), dem Artikel in Polymer Preprints (American Chemical Society) 2003, 44(1), 46-47 (unter Anwendung von Polyfluoriden als Katalysatoren). EP 1 352 006 A1 (unter Anwendung von Supersäuren als Katalysator) und EP 0 572 995 A1 (unter Anwendung von imidazolhaltigen Polymeren) beschrieben sind. Für die Darstellung von Uretdiongruppen aufweisenden Verbindungen sei unter anderem auf WO 2004/005364 und WO 2004/005364 und DE 10 2007 058 487 A1 verwiesen. Für Carbodiimid- und Uretoniminstruktur aufweisende Verbindungen sei auf DE 10 2005 058 835 A1 verwiesen. US 4 115 373 A beschreibt die Trimerisierung von Isocyanaten zu Isocyanuratgruppen enthaltenden Verbindungen in ineren Lösemitteln unter Verwendung von Mannich-Basen als Katalysatoren. Eine Übersicht zur Isocyanat-Oligomerisierung wird in J. Prallt. Chem./Chem. Ztg. 1994, 336, 185-200 gegeben.

Als Vernetzer für den optional hydrierten Nitrilkautschuk wird somit ein dimeres, trimeres, oligomeres oder polymeres Di- oder Polyisocyanat eingesetzt. Die Formulierung "Di- oder Polyisocyanat" steht dabei dafür, dass der Vernetzer zwei oder mehr freie oder gegebenenfalls blockierte Isocyanatgruppen im Molekül aufweist, "Dimer, trimer, oligomer oder polymers" steht dabei dafür, dass der Vernetzer aus einer entsprechenden Anzahl von zwei, drei oder mehr monomeren Mono-, Di- oder Polyisocyanaten aufgebaut ist.

Die Herstellung von blockierten bzw. geschützten Isocyanatfunktionalitäten sowie deren Entschützung sind unter anderem in den Artikel "Blocked Isocyanates" von Z. W. Wicks Jr. in Progress in Organic Coatings 1975, 3, 73-99 und "Blocked Isocyanates III: Part A: Mechanism and Chemistry" von Z. W. Wicks Jr., D. A. Wicks in Progress in Organic Coatings 1999, 36, 148-172 beschrieben. Generell versteht man unter einem blockierten Isocyanat ein Isocyanat, das mit einem Blockierungsreagenz umgesetzt wurde, und das in Gegenwart eines Nukleophils zu dessen Isocyanataddukt reagiert, wobei durch geeignete Reaktionsbedingungen das Blockierungsreagenz vom Isocyanat wieder entfernt werden kann.

Bevorzugt ist die erfindungsgemäße Verwendung von Vernetzern, die (i) als Strukturelement Einheiten von dimeren und trimeren Diisocyanaten ausweisen, wobei diese auch mehrfach in dem Vernetzermolekül vorkommen können, und die (ii) zwei oder mehr freie Isocyanatgruppen im Molekül besitzen.

Besonders bevorzugt ist die Verwendung von Vernetzern auf Basis von dimeren oder trimeren Diisocyanaten, welche Allophanat-, Biuret-, Uretdion-, Uretonimin-, verbrückte Carbamat-, Carbodiimid-, Oxadiazintrion-, Isocyanurat- oder Iminooxadiazindion-Strukturelemente aufweisen sowie zwei oder mehr freie Isocyanatgruppen im Molekül. Diese können auch als oligomere oder polymere Allophanate, Biurete, Uretdione, Uretonimine, verbrückte Carbamate, Carbodiimide, Isocyanurate, Oxadiazintrione oder Iminooxadiazindione vorliegen, d. h. dass die einzelnen Ringe sind dann zu einem Oligomer oder Polymer verbunden sind. Eine entsprechende Oligomer- oder Polymerbildung tritt insbesondere dann auf, wenn als monomere Isocyanate di- oder polyfunktionelle Isocyanate verwendet werden.

Grundsätzlich ist es möglich, dass der Vernetzer auf einem einzigen Typ eines monomeren, oligomeren oder polymeren Di- oder Polyisocyanats basiert. Es ist aber auch möglich, dass die genannten Strukturelemente durch eine Reaktion verschiedener monomerer, oligomerer oder polymerer Di- oder Polyisocyanate zustande kommen.

Geeignete Beispiele für cyclische Vernetzer auf Basis von monomeren Diisocyanaten, die einen aliphatischen oder cycloaliphatischen Rest aufweisen, sind dem Fachmann an sich bekannt und umfassen z.B. Isophorondiisocyanat, 1,4-Cyclohexyldiisocyanat, 1,1-Methylen-bis-(4-isocyanatocyclohexan), 1,2-Bis-(4-isocyanatononyl)-3-heptyl-4-pentylcyclohexan und Hexamethylen-1,6-diisocyanat. Die Venvendung von Isophorondiisocyanat und Hexamethylen-1,6-diisocyanat zur Herstellung der erfindungsgemäß einzusetzenden Vernetzer ist bevorzugt.

Es ist ferner möglich, einen cyclischen Vernetzer auf Basis von monomeren Diisocyanaten zu verwenden, der ausgehend von einem monomeren aromatischen Di- oder Polyisocyanat erhalten wird. Das monomere aromatische Di- oder Polyisocyanat weist vorzugsweise 6 bis 20 Kohlenstoffatome, besonders bevorzugt 6 bis 15 Kohlenstoffatome, auf. Geeignete aromatische monomere Di- oder Polyisocyanate sind z.B. 2,4-Diisocyanatotoluol, 2,6-Diisocyanatotoluol, 1,5-Naphthylen-diisocyanat, 4,4'-Methylendiphenyldiisocyanat, 1,3-Bis-(3-isocyanato-4-methyl phenyl)-2,4-dioxo-diazetidin, N,N'-Bis-(4-mothyl-3-isocyanatphenyl)-Harnstoff und Tetramethyl xylylendiisocyanat. Von diesen monomeren aromatischen Di- oder Polyisocyanaten sind 2,4-Diisocyanatotoluol, 2,6-Diisocyanatotoluol und 4,4'-Methylen-bis(phenyldiisocyanat) bevorzugt. Insbesondere bevorzugt sind 2,6-Diisocyanatotoluol und 4,4'-Methylen-bis(phenyldiisocyanat).

### Allophanate:

Im Rahmen der vorliegenden Erfindung können bevorzugt Allophanate (Carbamoylcarbamate) der allgemeinen Strukturformel (I-1) verwendet werden.

Diese allophanatgruppenhaltigen Verbindungen sind z.B. durch Umsetzung beliebiger Urethanhaltiger Ausgangsverbindungen (enthaltend Einheiten der allgemeinen Formel (R³-[M]ₚ-O-C(=O)-N(H)-[M]_{q}-R⁴) mit Monoisocyanaten der allgemeinen Formel R⁵-[M]ᵣ-NCO oder mit Diisocyanaten der allgemeinen Formel OCN-A-NCO zugänglich, wobei R⁵ bevorzugt einen Alkylrest mit 1 bis 20 Kohlenstoffatomen oder einen Arylrest mit 6 bis 20 Kohlenstoffatomen darstellt bzw. A einen entsprechend divalenten C₁-C₂₀ Alkylenrest bzw. C₆-C₂₀ Arylenrest bedeutet. Die bei derartigen Allophanat-Synthesen u.U. durchlaufenen harnstoffgruppenhaltigen Zwischenstufen können auch isoliert werden und so eine neue Ausgangsverbindung darstellen.

Als Monoisocyanate eignen sich für die Herstellung der Allophanate beliebige aromatische, aliphatische und cycloaliphatische Monoisocyanate mit 2 bis 20 Kohlenstoffatomen, wie Methylisocyanat, Isopropylisocyanat, n-Butylisocyanat, n-Hexylisocyanat, Cyclohexylisocyanat, Stearylisocyanat, gegebenenfalls halogenierte Phenylisocyanate, 1-Naphtylisocyanat, gegebenenfalls chlorierte oder fluorierte im-, o-, und p-Toloylisocyanate, p-Isopropylphenylisocyanat, 2,6-Diisopropylphenylisocyanat und p-Toluolsulfonyldiisocyanat.

Als Diisocyanate eignen sich für die Herstellung der Allophanate beliebige aromatische, aliphatische und cycloaliphatische Diisocyanate mit 6 bis 40 Kohlenstoffatomen, vorzugsweise 6 bis 15 Kohlenstoffatomen, wie Isophorondiisocyanat, 1,4-Cyclohexyldiisocyanat, 1,1-Methylen-bis-(isocyanatohexan), 1,2-Bis-(4-isocyanatononyl)-3-heptyl-4-pentylcyclohexan, Hexamethylen-1,6-diisocyanat, 2,4-Diisocyanatotoluol, 2,6-Diisocyanatotoluol, 1,5-Naphthylendiisocyanat, 4,4'-Methylendiphenyldiisocyanat, 1,3-Bis-(3-isocyanto-4-methylphenyl)-2,4-dioxodiazetidin, N,N'-Bis-(4-methyl-3-isocyanatophenyl)-Harnstoff und Tetramethylxylylendiisocyanat. Bevorzugt hiervon ist Hexamethylen-1,6-diisocyanat.

Solche Allophanate sowie deren Herstellung sind z.B. in der EP 0 000 194 A1 beschrieben, deren diesbezügliche Offenbarung in die vorliegende Erfindung unter Bezugnahme eingeschlossen wird. Das für die Allophanatbildung eingesetzte Isocyanat kann, bezogen auf die vorhandenen Urethangruppen der Ausgangsverbindung im Unterschuss, äquimolar wie auch im Überschuss eingesetzt werden. In letzterem Fall muss das überschüssige Isocyanat nach vollendeter Reaktion nach einer dem Fachmann bekannten Methode, wie z. B. Destillation oder Extraktion, abgetrennt werden. Bevorzugt ist es daher, pro 1,0 mol Urethangruppen der Ausgangsverbindung 0,1 bis 1,0 mol Isocyanat einzusetzen, besonders bevorzugt ist der Einsatz von 0,5 bis 1,0 mol Isocyanat. Die Allophanat- bzw. Biuretbildung der Urethan- bzw. Harnstoffgruppen durch die Monoisocyanate wird bevorzugt unter Einsatz von Katalysatoren durchgeführt.

Besonders bevorzugt handelt es sich bei den erfindungsgemäß eingesetzten Vernetzern um Dimere oder Trimere von monomeren Diisocyanaten, insbesondere um Uretdione oder Isocyanurate. Speziell bevorzugt wird trimeres Hexamethylendiisocyanat mit Isocyanurat-Struktur eingesetzt.

Zur Blockierung von Isocyanatgruppen können z.B. Hydrogensulfid-Addukte (Carbamoylsulfonate) oder Oxim-Addukte eingesetzt werden. Eine Blockierung kann z.B. mit Natriumdisulfid erfolgen, wobei das Addukt bei Temperaturen von etwa 100°C wieder deblockiert werden kann. Als Blockierungsmittel eignen sich ferner Phenole, wie Phenol, Nonylphenol, Kresol, Oxime wie Butanonoxim, Cyclohexanonoxim, Lactame wie γ-Caprolactam, sekundäre Amine wie Diisopropylamin, Pyrazole wie Dimethylpyrazol, Imidazole oder Triazole sowie Malon- und Essigsäureester.

Als **Hydroxylgruppen-haltige (H)NBR-Kautschuke** können im Rahmen dieser Anmeldung beliebige gegebenenfalls hydrierte Nitrilkautschuke eingesetzt werden, sofern sie Hydroxylgruppen-haltig sind undWiederholungs-einheiten abgeleitet von mindestens einem konjugierten Dien, mindestens einem α,β-ungesättigten Nitril, mindestens einem copolymerisierbaren Hydroxylgruppen-haltigen Monomeren ausgewählt aus der Gruppe bestehend aus Hydroxyalkyl(meth)acrylaten und gegebenenfalls einem oder mehreren weiteren copolymerisierbaren Monomeren aufweisen, wobei die C=C Doppelbindungen in diesen Wiederholungseinheiten im Fall des hydrierten Nitrilkautschuks ("HNBR") ganz oder teilweise hydriert sind.

Als **copolymerisierbare Hydroxylgruppen-haltige Monomere** werden Hydroxyalkyl(meth) acrylate eingesetzt. Bevorzugt sind Hydroxyalkylacrylate und Hydroxyalkylmethacrylate, in denen die C-Atom-Zahl der Hydroxyalkylgruppen 1 bis 20 beträgt, bevorzugt 1 bis 12.

Beispiele geeigneter Hydroxylgruppen-haltiger Monomere sind 2-Hydroxyethyl(meth)acrylat, 2-Hydroxypropyl(meth)acrylat, 3-Hydroxypropyl(meth)acrylat, 3-Chlor-2-hydroxypropyl(meth) acrylat, 3-Phenoxy-2-hydroxypropyl(meth)acrylat, Glycerinmono(meth)acrylat, Hydroxybutyl-(meth)acrylat, 3-Chlor-2-hydroxypropyl(meth)acrylat, Hydroxyhexyl(meth)acrylat, Hydroxyoctyl-(meth)acrylat, Hydroxymethyl(meth)acrylamid, 2-Hydroxypropyl(meth)acrylat, 3-Hydroxypropyl-(meth)acrylamid, Di-(Ethylenglykol)itaconat, Di-(Propylenglykol)itaconat, Bis(2-Hydroxypropyl)-itaconat, Bis(2-Hydroxyethyl)itaconat, Bis(2-Hydroxyethyl)fumarat, Bis(2-Hydroxyethyl)maleat Hydroxymethylvinylketon, (4-Vinylphenyl)methanol und 4-Vinylphenol.

Besonders bevorzugt sind Hydroxyalkyl(meth)acrylate, insbesondere Hydroxyethyl(meth)acrylat und Hydroxypropyl(meth)acrylat, insbesondere 2-Hydroxyethylmethacrylat (HEMA) oder 2-Hydroxyethylacrylat (HEA).

Der Anteil an hydroxylgruppenhaltigen Monomeren im (H)NBR-Kautschuk beträgt dabei allgemein 0,1 bis 25 Gew.-%, vorzugsweise 0,5 bis 10 Gew.-%, besonders bevorzugt 1,5 bis 7 Gew.-% und insbesondere 1,5 bis 5 Gew.-%.

Das konjugierte Dien im Nitrilkautschuk kann von jeder Natur sein. Bevorzugt werden (C₄-C₆) konjugierte Diene eingesetzt. Besonders bevorzugt sind 1,2-Butadien, 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Ein besonders bevorzugter Nitrilkautschuk ist ein Copolymer aus Acrylnitril und 1,3-Butadien sowie HEMA oder HEA. Ein besonders bevorzugter hydrierter Nitrilkautscluk ist ein Copolymer aus Acrylnitril und 1,3-Butadien sowie HEMA oder HEA, bei dem die C=C Doppelbindungen in den Wiederholungseinheiten ganz oder teilweise hydriert sind.

Als weitere copolymerisierbare Monomere können - falls gewünscht - beispielsweise aromatische Vinylmonomere, bevorzugt Styrol, α-Methylstyrol und Vinylpyridin, fluorhaltige Vinylmonomere, bevorzugt Fluorethylvinylether, Fluorpropylvinylether, o-Fluormethylstyrol, Vinylpentafluorbenzoat, Difluoroethylen und Tetrafluoroethylen, oder auch copolymerisierbare **Antiageing Monomere,** bevorzugt N-(4-anilinophenyl) acrylamid, N-(4-anilinophenyl) methacrylamid, N-(4-anilinphenyl) cinnamid, N-(4-anilinophenyl) crotonamid, N-phenyl-4-(3-vinylbenzyloxy)anilin und N-phenyl-4-(4-vinylbenzyloxy)anilin eingesetzt werden sowie **nicht-konjugierte Diene,** wie 4-Cyanocyclohexen und 4-Vinylcyclohexen, oder auch **Alkine,** wie 1- oder 2-Butin.

Alternativ können als weitere copolymerisierbare Monomere carboxygruppenhaltige, Termonomere eingesetzt werden, z.B. α,β-ungesättigte Monocarbonsäuren, deren Ester, α,β-ungesättigte Dicarbonsäuren, deren Mono- oder -Diester oder deren entsprechenden Anhydride oder Amide.

Als **α,β-ungesättigte Monocarbonsäuren** können bevorzugt Acrylsäure und Methacrylsäure eingesetzt werden.

Einsetzbar sind auch **Ester der α,β-ungesättigten Monocarbonsäuren,** bevorzugt deren Alkylester und Alkoxyalkylester. Bevorzugt sind die Alkylester, insbesondere C₁-C₁₈ Alkylester der α,β-ungesättigten Monocarbonsäuren, Besonders bevorzugt sind Alkylester, insbesondere C₁-C₁₈ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylate, Butylmethacrylat und 2-Ethylhexyl-methacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere C₂-C₁₂-Alkoxyalkylester der Acrylsäure oder der Methacrylsäure, ganz besonders bevorzugt Methoxymethylacrylat, Methoxyethyl(meth)acrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylat and Cyanoalkylmethacrylate, in denen die C-Atom-Zahl der Cyanoalkylgruppe 2-12 beträgt, vorzugsweise α-Cyanoethylacrylat, β-Cyanoethylacrylat und Cyanobutylmethacrylat. Einseztbar sind auch Fluor-substituierte Benzylgruppenhaltige Acrylate oder Methacrylate, vorzugtsweise Fluorobenzylacrylat, und Fluorobenzylmethacrylat. Einsetzbar sind auch Fluoroalkylgruppen haltige Acrylate und -Methacrylate, vorzugsweise Trifluoroethylacrylat und Tetrafluoropropylmethacrytat. Einsetzbar sind auch Aminogruppenhaltige α,β-ungesättigte Carbonsäureester wie Dimethylaminomethyl-acrylat und Diethylaminoethylacrylat.

Als weitere copolymerisierbare Monomere können ferner **α,β-ungesättigte Dicarbonsäuren,** bevorzugt Maleinsäure, Fumarsäure, Crotonsäure, Itaconsäure, Citraconsäure und Mesaconsäure, eingesetzt werden.

Eingesetzt werden können ferner **α,β-ungesättigte Dicarbonsäureanhydride,** bevorzugt Maleinsäureanhydrid, Itaconsäureanhydrid, Citraconsäureanhydrid und Mesaconsäureanhydrid.

Eingesetzt werden können ferner **Mono- oder Diester von α,β-ungesättigten Dicarbonsäuren.** Bei diesen α,β-ungesättigten Dicarbonsäuremono- oder diestern kann es sich beispielsweise handeln um **Alkyl-,** bevorzugt C₁-C₁₀-Alkyl, insbesondere Ethyl-, n-Propyl-, iso-Propyl, n-Butyl-, tert.-Butyl, n-Pentyl- oder n-Hexyl-, **Alkoxyalkyl-,** bevorzugt C₂-C₁₂ Alkoxyalkyl-, besonders bevorzugt C₃-C₈- Alkoxyalkyl, **Hydroxylalkyl,** bevorzugt C₁-C₁₂ Hydroxyalkyl-, besonders bevorzugt C₂-C₈- Hydroxyalkyl, **Cycloalkyl-,** bevorzugt C₅-C₁₂-Cycloalkyl-, besonders bevorzugt C₆-C₁₂-Cycloalkyl, **Alkylcycloalkyl-,** bevorzugt C₆-C₁₂-Alkylcycloalkyl-, besonders bevorzugt C₇-C₁₀-Alkylcycloalkyl, **Aryl-**, bevorzugt C₆-C₁₄-Aryl-Mono- oder -Diester, wobei es sich im Fall der Diester jeweils auch um gemischte Ester handeln kann.

Besonder bevorzugte **Alkylester von** α,β-**ungesättigten Monocarbonsäuren** sind Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat, 2-Propylheptylacrylat und Lauryl(meth)acrylat. Insbesondere wird n-Butylacrylat eingesetzt.

Besonders bevorzugte **Alkoxyalkylester der** α,β-**ungesättigten Monocarbonsäuren** sind Methoxyethyl(meth)acrylat, Ethoxyethyl(meth)acrylat und Methoxyethyl(meth)acrylat. Insbesondere wird Methoxyethylacrylat eingesetzt.

Als sonstige Ester der α,β-ungesättigten Monocarbonsäuren werden ferner beispielsweise Polyethylenglykol(meth)acrylat, Polypropylenglykol(meth)acrylat, Glycidyl(meth)acrylat, Epoxy(meth)acrylat, N-(2-Hydroxyethyl)acrylamide, N-(2-Hydroxymethyl)acrylamide und Urethan(meth)acrylat eingesetzt.

Beispiele von α,β-**ungesättigten Dicarbonsäuremonoestern** umfassen
- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butyl itaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat.
- Mesaconsäuremonoalkylester, bevorzugt Mesaconsäuremonoethylester;

Als α,β-**ungesättigte Dicarbonsäurediester** können die analogen Diester basierend auf den genannten Monoestergruppen eingesetzt werden, wobei es sich bei den Estergruppen auch um chemisch verschiedene handeln kann.

Als weitere copolymerisierbare Monomere kommen ferner radikalisch polymerisierbare Verbindungen mit in Betracht, die pro Molekül mindestens zwei olefinische Doppelbindungen enthalten. Beispiele mehrfach ungesättigter Verbindungen sind Acrylate, Methacrylate oder Itaconate von Polyolen wie z.B. Ethylenglykoldiacrylat, Diethylenglykoldimethacrylat, Triethylenglylkoldiacrylat, Butandiol-1,4-diacrylat, Propandiol-1,2-diacrylat, Butandiol-1,3-dimethacrylat, Neopentylglykoldiacrylat, Trimethylolpropandi(meth)acrylat, Trimethylolethan-di(meth)acrylat, Glycerindi- und -triacrylat, Pentaerythritdi-, -tri- und tetraacrylat oder -methacrylat, Dipentaerythrittetra, -penta- und hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylenglykolen oder von Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamin-tris-methacrylamid, Bis(methacrylamido-propoxy)ethan oder 2-Acrylamido-ethylacrylat. Beispiele für mehrfach ungesättigte Vinyl- und Allylverbindungen sind Divinylbenzol, Ethylenglykoldivinylether, Diallylplthalat, Allylmethacrylat, Diallylmaleat, Triallylisocyanurat oder Triallylphosphat.

Die Anteile an konjugiertem Dien und α,β-ungesättigtem Nitril in den optional hydrierten Nitrilkautschuken können in weiten Bereichen schwanken. Der Anteil des oder der Summe der konjugierten Diene liegt üblicherweise im Bereich von 39,5 bis 90 Gew.-%, bevorzugt im Bereich von 48,5 bis 85 Gew. %, bezogen auf das Gesamtpolymer. Der Anteil an hydroxylgruppenhaltigen Monomeren beträgt dabei allgemein 0,1 bis 25 Gew.-%, vorzugsweise 0,5 bis 10 Gew.-%, besonders bevorzugt 1,5 bis 7 Gew.-% und insbesondere 1,5 bis 5 Gew.-%, bezogen auf das Gesamtpolymer. Der Anteil des oder der Summe der α,β-ungesättigten Nitrile liegt üblicherweise bei 9,5 bis 60 Gew.-%, bevorzugt bei 13,5 bis 50 Gew.-%, bezogen auf das Gesamtpolymer. Die Anteile der Monomere summieren sich jeweils zu 100 Gew.-% auf. Die zusätzlichen Monomere können je nach Art des/der Termonomere in Mengen von 0 bis 50 Gew.%, bezogen auf das Gesamtpolymer, vorliegen. In diesem Fall werden entsprechende Anteile des oder der konjugierten Diene und/oder des oder der α,β-ungesättigten Nitrite durch die Anteile der zusätzlichen Monomere ersetzt, wobei sich die Anteile aller Monomere jeweils zu 100 Gew.-% aufsummieren.

Die erfindungsgemäßen Nitrilkautschuke, die auch ganz oder teilweise hydriert sein können, weisen **Mooney Viskositäten** (ML (1+4 at 100°C)) von üblicherweise 10 bis 160, bevorzugt von 15 bis 150 Mooney-Einheiten, besonders bevorzugt von 20 bis 150 Mooney-Einheiten und insbesondere 25 bis 145 Mooney-Einheiten auf. Die Bestimmung der Weste für die Mooney-Viskosität (ML 1+4 at 100°C) erfolgt jeweils mittels eines Scherscheibenviskosimeters nach DIN 53523/3 bzw. ASTM D 1646 bei 100°C.

Die eingesetzten Nitrilkautschuke besitzen ferner eine **Polydispersität** PDI = M_{w}/Mₙ, wobei M_{w} das Gewichtsmittel und Mₙ das Zahlenmittel des Molekulargewichts darstellt, im Bereich von vorzugsweise 1,0 - 6,0 und bevorzugt im Bereich von 1,5 - 5,0.

Die **Glastemperaturen** der erfindungsgemäß einzusetzenden optional hydrierten Nitrilkautschuke liegen im Bereich von -80°C bis +20°C, vorzugsweise im Bereich -70°C bis 10°C.

### Metathese und Hydrierung:

Alternativ zur Herstellung des Nitrilkautschuks ist es auch möglich, dass sich an die Herstellung des Nitrilkautschuks entweder (i) eine Metathese-Reaktion oder (ii) eine Metathese-Reaktion und eine nachfolgende Hydrierung oder (iii) nur eine Hydrierung anschließt. Diese Metathese- bzw. Hydrierungsreaktionen sind beide dem Fachmann hinlänglich bekannt und in der Literatur beschrieben. Die Metathese ist beispielsweise aus WO-A-02/100941 sowie der WO-A-02/100905 bekannt und kann zum Molekulargewichtsabbau eingesetzt werden. Die Hydrierung kann unter Einsatz homogener oder heterogener Hydrierkatalysatoren durchgeführt werden.

Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196**)**.

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium- oder Rutheniumhaltigen Katalysators erreicht werden. Einsetzbar ist beispielsweise ein Katalysator der allgemeinen Formel

(R¹ₘB)ₗ M Xₙ,

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu venvenden, der ein Ligand der Formel R1mB ist, wobei R1, m und B die zuvor für den Katalysator genannten Bedeutungen besitzen. Bevorzugt ist m gleich 3, B gleich Phosphor und die Reste R1 können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkyl-monocycloalkyl, Dicycloalkyl-monoaryl oder Dicyclalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverliältllis des Rhodiutn-haltigen Katalysators zum Co-Katalysator im Bereich von 1:3 bis 1:55, besonders bevorzugt im Bereich von 1:5 bis 1:45, bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist aus US-A-6,683,136 bekannt. Sie erfolgt tiblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung bzw. "hydriert" wird im Rahmen dieser Erfindung eine Umsetzung der im Ausgangs-Nitrilkautschuk vorhandenen C=C-Doppelbindungen zu mindestens 50 %, bevorzugt 70-100%, besonders bevorzugt 80-100%, verstanden.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

**Gegenstand der Erfindung** sind ferner **vullkanisierbare Zusammensetzungen** enthaltend mindestens einen optional hydrierten Hydroxylgruppen-haltigen Nitrilkautschuk wie vorstehend definiert und mindestens einen Vernetzer der allgemeinen Formel (I), der mindestens zwei Isocyanatgruppen enthält und wie vorstehend definiert. Optional enthalten diese **vulkanisierbaren Zusammensetzungen** mindestens einen weiteren Vernetzer, der von denjenigen der allgemeinen Formeln (I) verschieden ist.

Die Menge des Vernetzers der allgemeinen Formel (I) bzw. (I-1) bis (I-6), der mindestens zwei Isocyanatgruppen enthält, liegt üblicherweise im Bereich von 0,2 bis 25 phr, bevorzugt von 1 bis 20 phr, besonders bevorzugt im Bereich von 1,5 bis 15 phr und insbesondere im Bereich von 2 bis 10 phr, bezogen auf den Hydroxylgruppen-haltigen optional hydrierten Nitrilkautschuk. Im Sinne der Erfmdung bedeutet "phr" dabei "parts per hundred parts of rubber", wobei "rubber" gleichbedeutend mit dem Hydroxylgruppen-haltigen optional hydrierten Nitrilkautschuk ist.

Optional können derartige vulkanisierbare Zusammensetzungen auch noch ein oder mehrere dem Fachmann für Kautschuke geläufige Additive enthalten (siehe hierfür Ullmann's Encyclopedia of Industrial Chemistry, VCH Verlagsgesellschaft mbH, D-69451 Weinheim, 1993, Vol A 23 "Chemicals and Additives", S. 366-417). Diese umfassen Alterungsschutzmittel, Reversionsschutzmittel, Lichtschutzmittel, Ozonschutzmittel, Verarbeittungshilfsmittel, Verstärktungsmaterialien, Formtrennmittel, Weichmacher, Mineralöle, Tackifier, Treibmittel, Farbstoffe, Pigmente, Wachse, Harze, Streckmittel, organische Säuren, Vulkanisationsverzögerer, Metalloxide, Füllstoffe sowie Füllstoffaktivatoren.

Als mögliche weitere **Vernetzer,** die von den Verbindungen der allgemeinen Formeln (I) verschieden sind, können z.B. **Peroxide, Schwefel** oder **Schwefelspender** verwendet werden. Geeignete Peroxide sind Bis(2,4-dichlorbenzyl)peroxid, Dibenzoylperoxid, Bis(4-chlorbenzoyl)-peroxid, 1,1-Bis-(t-butylperoxy)-3,3,5-trimethylcylohexan, tert-Butylperbenzoat, 2,2 Bis(t-butylperoxy)buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimetylolpropantrimethacrylat, Zinkacrylat, Zinkdiacrylat, Zinkmethacrylat, Zinkdimethacrylat, 1,2-Polybutadien oder N,N'-m-phenylen-dimaleinimid geeignet.

Als weitere Vernetzer können auch Schwefel in elementarer löslicher oder unlöslicher Form oder Schwefelspender eingesetzt werden. Als Schwefelspender kommen z.B. Dimorpholyldisulfid (DTDM), 2-Morpholino-dithiobenzothiazol (MBSS), Caprolactamdisulfid, Dipentamethylenthiuramtetrasulfid (DPTT), und Tetramethylthiuramdisulfid (TMTD) in Frage. Sofern der vulkanisierbaren Zusammensetzung Schwefel oder ein Schwefelspenders als weitere Vernetzer zugesetzt werden, ist es u.U, empfehlenswert, noch weitere Zusätze zu verwenden, mit deren Hilfe die Vernetzungsausbeute erhöht werden kann. Grundsätzlich kann die Vernetzung aber auch mit Schwefel oder Schwefelspendern als einzigem weiteren Vernetzer neben den erfindungsgemäß einzusetzenden Vernetzern erfolgen.

Umgekehrt kann die Vernetzung der Hydroxylgruppen-haltigen optional hydrierten Nitrilkautschuke aber auch nur in Gegenwart der oben genannten Zusätze erfolgen, d.h. ohne Zusatz von elementarem Schwefel oder Schwefelspendern, aber natürlich weiterhin in Gegenwart mindestens eines Vernetzers der allgemeinen Formel (I).

Als Zusätze, mit deren Hilfe die Vernetzungsausbeute beim zusätzlichen Einsatz von Schwefel oder Schivefelspendern erhöht werden kann, eignen sich z.B. Dithiocarbamate, Thiurame, Thiazole, Sulfenamide, Xanthogenate, bi- oder polycyclische Amine, Guanidinderivate, Dithiophosphate, Caprolactame und Thioharnstoffderivate.

Als Dithiocarbamate können beispielsweise eingesetzt werden: Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZBEC), Zinkpentamethylendithiocarbamat (ZSMC), Tellurdiethyldithiocarbamat, Nickeldibutyldithiocarbamat, Nickeldimethyldithiocarbamat und Zinkdiisononyldithiocarbamat.

Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid und Tetraethylthiuramdisulfid (TETD).

Als Thiazole können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzo-thiazol.

Als Sulfenamidderivate können zum Beispiel eingesetzt werden: N-Cyclohexyl-2-benzothiazylsulfenamid (CBS), N-tert-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert-butylsulfenamid und Oxydiethylenthiocarbamyl-N-oxyethylensulfenamid.

Als Xanthogenate können zum Beispiel eingesetzt werden: Natriumdibutylxanthogenat, Zinkisopropyldibutylxanthogenat und Zinkdibutylxanthogenat.

Als bi- oder polycyclische Amine können zum Beispiel eingesetzt werden: 1,8-Diazabicyclo[5.4.0]undec-7-en (DBU), 1,5-Diazabicyclo[4,3.0]non-5-en (DBN), 1,4-Diazabicyclo[2.2.2]octan (DABCO), 1,5,7-Triazabicyclo[4.4.0]dec-5-en (TBD) und 7-Methyl-1,5,7-triazabicyclo[4.4.0]dec-5-en.

Als Guanidinderivate können zum Beispiel eingesetzt werden: Diphenylguanidin (DPG), Di-o-tolylguanidin (DOTG) und o-Tolylbiguanid (OTBG),

Als Dithiophosphate können beispielsweise eingesetzt werden: Zinkdialkydithiophosphate (Kettenlänge der Alkylreste C₂ bis C₁₆), Kupferdialkyldithiophosphate (Kettenlänge der Alkylreste C₂ bis C₁₆) und Dithiophoshorylpolysulfid.

Als Caprolactam kann beispielsweise Dithiobiscaprolactam eingesetzt werden.
Als Thioharnstoffderivate können beispielsweise N,N'-Diphenylthioharnstoff (DPTU), Diethylthiohamstoff (DETU) und Ethylenthioharnstoff (ETU) eingesetzt werden.

Ebenso als Zusätze geeignet sind beispielsweise: Zinkdiamhidiisocyanat, Hexamethylentetramin, 1,3-Bis(citraconimidomethyl)benzol sowie zyklische Disulfane.

Bei carboxyl- und hydroxylhaltigen Nitrükautschuken kann als weitere Vernetzungsmethode eine polyaminische Vernetzungsmethode verwendet werden, wobei die verwendeten Polyamine mindestens 2 Aminogruppen enthalten, oder diese in-situ während der Vulkanisation gebildet werden. Als Polyamine können beispielsweise aliphatische Polyamine, wie Hexamethylendiamin, Hexamethylendiamincarbamat, Hexamethylendiamin-Zimtaldehyd-Addukte oder Hexamethylendiamin-dibenzoatsalze oder aromatische Polyamine wie 2,2-Bis(4-(4-aminophenoxy)phenyl)propan, 4,4'-Methylendianilin, m-Phenylendiamin, p-Phenylendiamin oder 4,4'-Methylen-bis(o-chloranilin) verwendet werden. Reagenzien, die mindestens 2 Hydrazideinheiten aufweisen, wie Isophtalsäuredihydrazid, Adipinsäuredihydrazid oder Sebacinsäuredihydrazid sind ebenfalls geeignet.

Die genannten Zusätze als auch die Vernetzungsmittel können einzeln oder auch in Mischungen eingesetzt werden. Bevorzugt werden folgende zusätzliche Substanzen für die Vernetzung der optional hydrierten Hydroxylgruppen-haltigen Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithiobiscaprolactam.

Daneben können auch Anvulkanisationsverzögerer für zusätzliche Vernetzungen eingesetzt werden. Hierzu gehören Cyclohexylthiophthalimid (CTP), N,N'-Dinitrosopentamathylentetramin (DNPT), Phthalsäureanhydrid (PTA) und Diphenylnitrosamin. Bevorzugt ist Cyclohexylthiophthalimid (CTP).

Bei der Vernetzung ist es gegebenenfalls auch sinnvoll, noch weitere anorganische bzw. organische Substanzen mit zu verwenden, z.B. Zinkoxid, Zinkcarbonat, Bleioxid, Magnesiumoxid, gesättigte oder ungesättigte organische Fettsäuren und deren Zinksalze, Polyalkohole, Aminoalkohole, z.B. Triethanolamin sowie Amine, z.B. Dibutylamin, Dicyclohexylamin, Cyclohexylethylamin und Polyetheramine.

Bevorzugt werden neben mindestens einer Verbindung der allgemeinen Formel (I) - (IV) in der vulkanisierbaren Zusammensetzung keine oder nur unbedeutende Mengen weiterer Vernetzer eingesetzt. Sofern weitere eingesetzt werden, liegt die Gesamtmenge aller in der vulkanisierbaren Zusammensetzung vorhandenen Vernetzer (d.h. die erfindungsgemäßen der allgemeinen Formel (I) - (IV) plus weiterer Vernetzer) einschließlich die Vernetzungsausbeute erhöhender Zusätze sowie Anvulkanisationsverzögerer i.d.R, im Bereich von 0,5 bis 30 phr, bevorzugt 1 bis 23, besonders bevorzugt 1,5 bis 18 phr, ganz besonders bevorzugt 2 bis 15 phr und insbesondere 3 bis 12 phr, bezogen auf den Hydroxylgruppen-haltigen optional hydrierten Nitrilkautschuk.

In einer bevorzugten Ausführungsform handelt es sich um vulkanisierbare Zusammensetzungen, die zusätzlich mindestens einen Füllstoff enthalten.

Als **Füllstoffe** können beispielsweise Ruß, Kieselsäure, Bariumsulfat, Titandioxid, Zinkoxid, Calciumoxid, Calciumcarbonat, Magnesiumoxid, Aluminumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform), oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren sind Triethanolamin, Trimethylolpropan, Hexantriol oder Polyethylenglykole mit Molekulargewichten von 74 bis 10 000 g/mol. Die Menge an Füllstoffaktivatoren beträgt üblicherweise 0 bis 10 phr, bezogen auf 100 phr des optional hydrierten Nitrilkautschuks.

Als **Alterungsschutzmittel** können phenolische, aminische und auch sonstige Alterungsschutzmittel zugesetzt werden.

Geeignete phenolische Alterungsschutzmittel sind alkylierte Phenole, styrolisiertes Phenol, sterisch gehinderte Phenole wie 2,6-Di-tert.-Butylphenol, 2,6-Di-*tert*-Butyl-p-Kresol (BHT), 2,6-Di-tert.-Butyl-4-Ethylphenol, estergruppenhaltige sterisch gehindeile Phenole, thioetherhaltige sterisch gehinderte Phenole, 2,2'-Methylen-bis-(4-Methyl-6-*tert*-Butylphenol) (BPH) sowie sterisch gehinderte Thiobisphenole.

Falls eine Verfärbung des Kautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-α-Naphthylamin (PAN), Phenyl-β-Naphthylamin (PBN), vorzugsweise solche auf Phenylendiaminbasis eingesetzt. Beispiele für Phenylendiamine sind *N-*Isopropyl-*N*'-phenyl-*p*-Phenylendiamin, *N*-1,3-Dimethylbutyl-*N'*-Phenyl-p-Phenylendiamin (6PPD), *N*-1,4-Dimethylpentyl-*N'*-phenyl-*p*-Phenylendiamin (7PPD), *N*,*N'*-bis-1,4-(1,4-Dimethylpentyl)-*p*-Phenylendiamin (77PD) etc.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im Allgemeinen in Kombination mit phenolischen Alterungsschutzmitteln eingesetzt. TMQ, MBI und MMBI werden vor allem für NBR-Typen verwendet, die neben der Isocyanatvernetzung zusätzlich peroxidisch vulkanisiert werden.

Als **Formtrennmittel** kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen. Die Formtrennmittel werden als Mischungsbestandteil in Mengen von ca. 0 bis 10 phr, bevorzugt 0,5 bis 5 phr, bezogen auf 100 phr des Hydroxylgruppen-haltigen optional hydrierten Nitrilkautschuks eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten. Vorzugsweise ist die erfindungsgemäße Nitrilkautschukzusammensetzung frei von zinnhaltigen Verbindungen.

**Gegenstand der vorliegenden Erfindung** sind ferner ein Verfahren zur Herstellung der vulkanisierbaren Zusammensetzungen durch Vermischen der Inhaltsstoffe und ein Verfahren zur Herstellung von Vulkanisate, dadurch gekennzeichnet, dass die zuvor genannte Zusammensetzung unter Erwärmen vernetzt wird, und die so erhältlichen Vulkanisate. Die Herstellung der Zusammensetzungen und deren Vernetzung kann nach üblichen Verfahren durchgeführt werden.

### BEISPIELE:

Der Stickstoffgehalt zur Bestimmung des **Acrylnitrilgehalts** (ACN-Gehalt) wird in den erfindungsgemäßen optional hydrierten Hydroxylgruppen-haltigen Nitrilkautschuken gemäß DIN 53 625 nach Kjeldahl bestimmt. Aufgrund des Gehalts an polaren Comonomeren sind die Nitrilkautschuke üblicherweise in Methylethylketon bei 20°C > 85 Gew. % löslich.

Die Bestimmung der **Glasübergangstemperatur,** sowie deren sogenannte Onset- und Offsetpunkte erfolgt mittels dynamischer Differenzkalorimetrie (engl.: *Differential Scanning Calorimetry-DSC*) nach ASTM E 1356-03 bzw. nach DIN 11357-2.

Die Bestimmung der **Mikrostruktur und des Termonomergehaltes** der einzelnen Polymere erfolgte mittels ¹H NMR (Gerät: Bruker DPX400 mit Software XWIN-NMR 3.1, Messfrequenz 400 MHz, Lösemittel CDCl₃).

Die Bestimmung der Werte für die **Mooney-Viskosität** (ML 1+4@100°C) erfolgt jeweils mittels eines Scherscheibenviskosimeters nach DIN 53523/3 bzw. ASTM D 1646 bei 100°C.

Die Bestimmung des **MSR (Mooney Stress Relaxation)** erfolgt jeweils mittels eines Scherscheibenviskosimeters nach ISO 289-4:2003(E) bei 100°C.

Der **Vulkanisationsverlauf** im MDR und dessen analytischen Daten wurden an einem Monsanto-Rheometer MDR 2000 nach ASTM D5289-95 gemessen.

Der **Druckverformungsrest** ("DVR") (engl.: *Compression Set*) bei der angegebenen Temperatur wurde nach DIN 53517 gemessen.

Die **Härte nach Shore A** wurde nach ASTM-D2240-81 gemessen.

Die **Zugversuche** zur Bestimmung der Spannung in Abhängigkeit von der Deformation wurden nach DIN 53504 bzw. ASTM D412-80 durchgeführt.

Die in den nachfolgenden Tabellen angegebenen Abkürzungen haben folgende Bedeutungen:
- "RT": Raumtemperatur (23 ± 2 °C)
- "TS": Tensile strength (engl.), Zugspannung, gemessen bei RT
- "EB": Elongation at break (engl.), Bruchdehnung, gemessen bei RT
- "M50": Modul bei 50% Dehnung, gemessen bei RT
- "M 100": Modul bei 100% Dehnung, gemessen bei RT
- "M300": Modul bei 300% Dehnung, gemessen bei RT
- "S min": ist das minimale Drehmoment der Vernetzungsisotherme
- "S max": ist das maximale Drehmoment der Vemetzungsisotherme
- "Delta S": ist gleich "S max - S min"
- "t₁₀": ist die Zeit, wenn 10 % von S max erreicht werden
- "t₅₀": ist die Zeit, wenn 50% von S max erreicht werden
- "t₉₀": ist die Zeit, wenn 90% von S max erreicht werden
- "t₉₅": ist die Zeit, wenn 95% von S max erreicht werden
- "TS2": bedeutet die Zeit, bis die Mooney-Viskosität sich um zwei Einheiten erhöht hat im Vergleich zum Ausgangspunkt

### Folgende Substanzen wurden in den Beispielen eingesetzt:

Die nachfolgenden Chemikalien wurden als Handelsprodukte der jeweils angegebenen Firmen bezogen oder stammen aus Produktionsanlagen der angegebenen Firmen.
- Addolink^{®} TT: dimeres Toluoldiisocyanat mit Uretdion-Struktur (Handelsprodukt der Rheinchemie Rheinau GmbH)
- Corax^{®} N550/30: Ruß (Handelsprodukt der Evonik Degussa)
- Desmodur^{®} N3300: trimeres Hexamethylendiisocyanat mit Cyanurat-Strukturen (Handelsprodukt der Bayer Material Science AG)
- Diplast^{®} TM 8-10/ST: Trioctylmellitat (Handelsprodukt der Lonza SpA)
- TAIC 70: Triallylisocyanurat (Handelsprodukt der Kettlitz Chemie GmbH & Co.)
- Luvomaxx^{®} CDPA: p-Dicumyldiphenylamin (Handelsprodukt von Firma Lehmann & Voss)
- Maglite^{®} DE: Magnesiumoxid (Handelsprodukt der HallStar Company)
- Mischung Winstay^{®}: 29/Naugawhite: Mischung aus 25 g Sorbilene Mix (Mischung aus Sorbitanestern und ethoxylierten Sorbitanestern) der Lamberti, 38 g Naughawhite (2,2'-Methylenbis(6-nonyl-p-cresol)) der Chemtura, 125 g Wingstay^{®} 29 (styrolisiertes Diphenylamin) der Firma Eliokem und 63 g Wasser
- PERKADOX^{®} 14-40: Di-(tertbutylperoxyisopropyl) benzol geträgert auf silica& whiting (40% aktiver Wirkstoff) (Handelsprodukt der Akzo Nobel Chemicals GmbH)
- "Prämix-Lösung Fe(II): SO₄" enthält 0,986 g Fe(II)SO₄*7 H₂O und 2,0 g Rongalit^{®}C in 400g Wasser
- Rongalit C^{®}: Natriumsalz eines Sulfinsäurederivates (Handelsprodukt der BASF SE)
- t-DDM;: tertiäres Dodecylmercaptan; LANXESS Deutschland GmbH
- Texapon^{®} K-12:: Natrium-Lautylsulfat (Handelsprodukt der Cognis GmbH)
- Trigonox^{®} NT 50: p-Menthanhydroperoxid (handelsprodukt der Akzo-Degussa)
- Vulkanox^{®} ZMB2/C5:: Zinksalz von 4- und 5-Methyl-2-mercaptobenzimidazol (Handelsprodukt der LANXESS Deutschland GmbH)

### I Herstellung der Nitrilkautschuke A, B, C (Erfindungsgemäße Beispiele)

Die Herstellung der in den folgenden Beispielserien eingesetzten Nitrilkautschuke A, B, C erfolgte nach der in Tabelle 1 angegebenen Basisrezeptur, wobei sämtliche Einsatzstoffe in Gew.-Teilen bezogen auf 100 Gew.-Teile der Monomermischung angegeben sind. Tabellen 1 nennt auch die jeweiligen Polymerisationsbedingungen.

**Tabelle 1:**

| **Nitrilkautschuk** | **A** | **B** | **C** |
|---|---|---|---|
| **Butadien** | 59,0 | 56,5 | 56,1 |
| **Acrylnitril** | 36,0 | 36,0 | 35,5 |
| **2-Hydroxetlymethacrylat (HEMA)** | 5 | 7,5 | - |
| **2-Hydroxethlyacrylat (HEA)** | - | - | 8,4 |
| **Gesamt-Wassermenge** | 220 | 220 | 220 |
| **Texapon^{®} K-12** | 3,0 | 3,0 | 3,0 |
| **Na₂SO₄** | 0,12 | 0,12 | 0,12 |
| **pH** | 7 | 7 | 7 |
| **t-DDM** | 0,54 | 0,52 | 0,56 |
| **Trigonox^{®} NT 50** | 0,02 | 0,02 | 0,02 |
| **Prämix-Lösung FeSO₄** | 0,03 | 0,03 | 0,07 |
| **Diethylhydroxylamin** | 0,2 | 0,2 | 0,2 |
| **Mischung Winstay^{®} 29** / **Naugawhite** | 0,18 | 0,18 | 0,18 |
| | | | |
| **Polvmerisationstemperatur [°C]** | 8,0±0,5 | 8,0±0,5 | 8,0±0,5 |
| **Polymerisationsumsatz [%]** | 85 | 84 | 83 |
| **Polymerisationszeit [h]** | 6,0 | 5,5 | 10,0 |

Die Herstellung der Nitrilkautschuke erfolgte diskontinuierlich in einem 5L-Autoklaven mit Rührwerk. Bei den Autoklavenansätzen wurden jeweils 1,25 kg der Monomermischung und eine Gesamtwassermenge von 2,1 kg sowie EDTA in einer äquimolaren Menge bezogen auf das Fe-II verwendet. Von dieser Wassermenge wurden 1,9 kg mit dem Emulgator im Autoklaven vorgelegt und mit einem Stickstoffstrom gespült. Danach wurden die entstabilisierten Monomeren und die in Tabelle 1 angegebene Menge des Molekulargewichtsreglers t-DDM zugegeben, und der Reaktor verschlossen, Nach der Thermostatisierung des Reaktorinhalts wurden die Polymerisationen durch die Zugabe der Prämix-Lösungen und von para-Menthanhydroperoxid (Trigonox^{®}NT50) gestartet. Der Polymerisationsverlauf wurde durch gravimetrische Umsatzbestimmungen verfolgt. Bei Erreichen der in Tabelle 1 angegebenen Umsätze wurde die Polymerisation durch Zugabe einer wässrigen Lösung von Diethylhydroxylamin abgestoppt. Nicht umgesetzte Monomere und sonstige flüchtige Bestandteile wurden mittels Wasserdampfdestillation entfernt.

Die getrockneten NBR-Kautschuke wurden durch die Mooney-Viskosität, ihre MSR, den ACN-Gehalt und die Glasübergangstemeratur charakterisiert und der Gehalt des Hydroxylgruppen-haltigen Termonomers durch ¹H-NMR Analyse bestimmt (Tabelle 2).

**Tabelle 2: Nitrilkautschuke A, B, C; Eigenschaften**

| **Nitrilkautschuke** | **A** | **B** | **C** |
|---|---|---|---|
| **ACN-Gehalt (%)** | 34,1 | 34,1 | 35,3 |
| **Mooney Viskosität ML(1+4 at 100°C) (Mu)** | 27 | 30 | 28 |
| **MSR (Mu/s)** | 0,653 | 0,626 | 0,591 |
| **Termonomer** | HEMA | HEMA | HEA |
| **Einbau Termonomer (Gew.%)** | 2,9 | 4,8 | 2,0 |
| **Glasübergangstemperatur T_{G} (°C)** | 21,6 | 20,3 | 23,4 |

### II Herstellung von Vulkanisaten V1 bis V9 der Nitrilkautschuke A, B, C (Erfindungsgemäße Beispiele)

Aus den Nitrilkautschuken A, B und C wurden wie nachfolgend beschrieben die Vulkanisate V1 bis V9 hergestellt. Die Bestandteile der Mischungen sind auf 100 Teile Nitrilkautschuk bezogen und in den Tabellen 3,7 und 11 angegeben.

Die Mischungen wurden in einem Banbury Mixer hergestellt. Hierzu wurden der Kautschuk und alle in Tabelle 3, 7 bzw. 11 genannten Zuschlagstoffe insgesamt 4 Minuten bei einer maximalen Temperatur von bis zu 120 °C gemischt. Der Kautschuk wurde hierzu im Mischer vorgelegt, nach 1 Minute alle weiteren Zuschlagstoffe hinzugegeben und nach 2 weiteren Minuten ein Kehrschritt durchgeführt. Nach insgesamt 4 Minuten wurde der Kautschuk aus dem Mischer ausgeworfen. Der Compound wurde bei einer Temperatur von 170 °C für 30 min vulkanisiert.

**Tabelle 3: Vulkanisate V1-V3; Zusammensetzung**

| **Mischung** | | **V1** | **V2** | **V3** |
|---|---|---|---|---|
| **Polymer A** | | 100 | | |
| **Polymer B** | | | 100 | |
| **Polymer C** | | | | 100 |
| **LUVOMAXX^{®} CDPA** | | 1 | 1 | 1 |
| **VULKANOX^{®} ZMB2/C5** | | 0,4 | 0,4 | 0,4 |
| **MAGLITE^{®} DE** | | 2 | 2 | 2 |
| **CORAX^{®} N 550/30** | | 50 | 50 | 50 |
| **DIPLAST^{®} TM 8-10/ST** | | 5 | 5 | 5 |
| **ADDOLINK^{®} TT** | | 8 | 8 | 8 |
| | | | | |
| **Total** | **phr** | 166,4 | 166,4 | 166,4 |
| **Dichte** | **g/ccm** | 1,162 | 1,162 | 1,162 |

Die erhaltenen Vulkanisate hatten die in den Tabellen 4 bis 6 angegebenen Eigenschaften:

**Tabelle 4: Vulkanisate V1-V3; Vulkanisationsverlauf im MDR (170 °C/30min)**

| **Mischung** | **V1** | **V2** | **V3** |
|---|---|---|---|
| **S max (dNm)** | 30,5 | 41,9 | 23,5 |
| **t₁₀ (min)** | 1,0 | 1,0 | 1,0 |
| **t₉₅ (min)** | 11,7 | 14,2 | 13,5 |

Entsprechend den Anteilen an liydroxylhaltigen Monomeren in den Polymeren A-C liegt das Niveau des jeweiligen maximalen Drehmomentes. Alle Vernetzungen wurden ohne den Zusatz von Schwermetallverbindungen als Katalysator, wie z.B. organischen Zinnverbindungen, durchgeführt.

**Tabelle 5: Vulkanisate V1-V3; Vulkanisateigenschaften**

| **Mischung** | | | **V1** | **V2** | **V3** |
|---|---|---|---|---|---|
| **Vernetzungstemperatur** | **°C** | **170** | | | |
| **Vernetzungszeit** | **min** | | 12 | 13 | 13 |
| **TS** | **MPa** | | 24,7 | 23 | 14,5 |
| **EB** | **%** | | 259 | 171 | 144 |
| **M50** | **MPa** | | 3,3 | 4,4 | 3,4 |
| **M100** | **MPa** | | 8,5 | 12 | 9 |
| **M300** | **MPa** | | | | |
| **Härte** | **Shore A** | | 74 | 78 | 75 |

Die erfindungsgemäßen Polymere zeichnen sich in ihren Vulkanisaten durch eine hohe Zugspannung und sehr hohe Modulwerte bei 100% Dehnung aus.

**Tabelle 6: Vulkanisate V1-V3; Druckverformungsrest bei RT bzw. 100°C gemessen**

| **Mischung** | | **V1** | **V2** | **V3** |
|---|---|---|---|---|
| **Temperatur und Zeit: RT und 24 Stunden** | | | | |
| **DVR** | % | 4 | 3 | 6 |
| | | | | |

| **Temperatur und Zeit: 100°C und 24 Stunden** | | | | |
|---|---|---|---|---|
| **DVR** | % | 30 | 16 | 32 |

Durch das Verhältnis zwischen Vernetzer und hydroxylhaltigem Termonomer lassen sich Bruchdehnung und maximales Drehmoment im Vulkanisat problemlos mit gleichzeitig gutem Druckverformungsrest einstellen.

**Tabelle 7: Vulkanisate V4-V7; Zusammensetzung**

| **Mischung** | | **V4** | **V5** | **V6** | **V7** |
|---|---|---|---|---|---|
| **Polymer A** | | 100 | 100 | | |
| **Polymer B** | | | | 100 | 100 |
| **LUVOMAXX^{®} CDPA** | | 1 | 1 | 1 | 1 |
| **VULKANOX^{®} ZMB2/C5** | | 0,4 | 0,4 | 0,4 | 0,4 |
| **MAGLITE^{®} DE** | | 2 | 2 | 2 | 2 |
| **CORAX^{®} N 550/30** | | 50 | 50 | 50 | 50 |
| **DIPLAST^{®} TM 8-10/ST** | | 5 | 5 | 5 | 5 |
| **ADDOLINK^{®} TT** | | 4 | 6 | 4 | 6 |
| | | | | | |
| **Total** | **phr** | 162,4 | 164,4 | 162,4 | 164,4 |
| **Dichte** | **g/ccm** | 1,156 | 1,159 | 1,156 | 1,159 |

Die erhaltenen Vulkanisate hatten die in den Tabellen 8 bis 10 angegebenen Eigenschaften:

**Tabelle 8: Vulkanisate V4-V7M; Vulkanisationsverlauf im MDR (170 °C/30min)**

| **Mischung** | **V4** | **V5** | **V6** | **V7** |
|---|---|---|---|---|
| **S max (dNm)** | 17,6 | 29,4 | 21,5 | 32,8 |
| **t₁₀ (min)** | 1,2 | 1,2 | 1,1 | 1,0 |
| **t₉₅ (min)** | 14,1 | 17,9 | 12,6 | 12,3 |

Entsprechend dem Anteil des hydroxylhaltigen Monomers in den Polymeren zum Verhältnis des dimeren Diisocyanates liegt das Niveau des jeweiligen maximalen Drehmomentes. Alle Vernetzungen wurden ohne den Zusatz von Schwermetallverbindungen als Katalysator, wie z.B. organische Zinnverbindungen, durchgeführt.

**Tabelle 9: Vulkanisate V4-V7; Eigenschaften**

| **Mischung** | | | **V4** | **V5** | **V6** | **V7** |
|---|---|---|---|---|---|---|
| **Vernetzungstemperatur** | **°C** | **170** | | | | |
| **Vernetzungszeit** | **min** | | 20 | 20 | 20 | 20 |
| **TS** | **MPa** | | 20,5 | 19,8 | 20 | 19,5 |
| **EB** | **%** | | 417 | 271 | 336 | 220 |
| **M50** | **MPa** | | 2,8 | 4 | 3,3 | 4,6 |
| **M100** | **MPa** | | 5,3 | 7,9 | 6,4 | 9,5 |
| **M300** | **MPa** | | 15,8 | 21,3 | 18,4 | |
| **Härte** | **Shore A** | | 71 | 75 | 72 | 78 |

Die erfindungsgemäßen Polymere führen zu Vulkanisaten mit hoher Zugspannung und sehr hohen Modulwerte bei 100% Dehnung relativ zur Bruchdehnung.

**Tabelle 10: Vulkanisate V4-V7; Druckverformungsrest bei RT bzw. 100°C**

| **Mischung** | | **V4** | **V5** | **V6** | **V7** |
|---|---|---|---|---|---|
| **Temperatur und Zeit: RT und 24 Stunden** | | | | | |
| **DVR** | % | 9 | 6 | 6 | 5 |
| | | | | | |

| **Temperatur und Zeit: 100°C und 24 Stunden** | | | | | |
|---|---|---|---|---|---|
| **DVR** | % | 20 | 23 | 15 | 15 |

Neben Vernetzungen mittels dimeren Diisocyanaten mit Uretdion-Struktur wurden auch Vernetzungen mit trimeren Hexamethylendiisocyanaten mit Cyanurat-Strukturen durchgeführt.

**Tabelle 11: Vulkanisate V8-V9; Zusammensetzung**

| **Mischung** | | **V8** | **V9** |
|---|---|---|---|
| **Polymer B** | | 100 | 100 |
| **LUVOMAXX^{®} CDPA** | | 1 | 1 |
| **VULKANOX^{®} ZMB2/C5** | | 0,4 | 0,4 |
| **MAGLITE^{®} DE** | | 2 | 2 |
| **CORAX^{®} N 550/30** | | 50 | 50 |
| **DIPLAST^{®} TM 8-10/ST** | | 5 | 5 |
| **Desmodur^{®} N3300** | | 4 | 6 |
| | | | |
| **Total** | **phr** | 162,4 | 164,4 |
| **Dichte** | **g/ccm** | 1,15 | 1,15 |

Die erhaltenen Vulkanisate hatten die in den Tabellen 12 bis 14 angegebenen Eigenschaften:

**Tabelle 12: Vulkanisate V8 und V9; Vulkanisationsverlauf im MDR (170 °C/40min)**

| **Mischung** | **V8** | **V9** |
|---|---|---|
| **S max (dNm)** | 15,6 | 23,3 |
| **t₁₀ (min)** | 0,5 | 0,5 |
| **t₉₅ (min)** | 6,2 | 6,9 |

Entsprechend den Anteilen an Vernetzer liegt das Niveau des jeweiligen maximalen Drehmomentes. Alle Vernetzungen wurden ohne den Zusatz von Schwermetallverbindungen als Katalysator, wie z.B. organische Zinnverbindungen, durchgeführt.

**Tabelle 13: Vulkanisate V8 und V9; Eigenschaften**

| **Mischung** | | | **V8** | **V9** |
|---|---|---|---|---|
| **Vernetzungstemperatur** | **°C** | **170** | | |
| **Vernetzungszeit** | **min** | | 8 | 8 |
| **TS** | **MPa** | | 16,3 | 17,5 |
| **EB** | **%** | | 359 | 238 |
| **M50** | **MPa** | | 2,1 | 3,1 |
| **M100** | **MPa** | | 4,6 | 7,7 |
| **M300** | **MPa** | | 14,4 | |
| **Härte** | **Shore A** | | 74 | 69 |

**Tabelle 14: Vulkanisate V8 und V9; Druckverformungsrest bei RT, 100°C, 150°C**

| **Mischung** | | **V8** | **V9** |
|---|---|---|---|
| **Temperatur und Zenit: RT und 24 Stunden** | | | |
| **DVR** | % | 10 | 6 |
| | | | |

| **Temperatur und Zeit: 100°C und 24 Stunden** | | | |
|---|---|---|---|
| **DVR** | % | 17 | 15 |
| | | | |

| **Temperatur und Zeit: 150°C und 24 Stunden** | | | |
|---|---|---|---|
| **DVR** | % | 57 | 49 |

Die erfindungsgemäßen Vulkanisate zeichnen sich durch einen sehr niedrigen Druckverformungsrest selbst bei für NBR ungewöhnlich hohen Temperaturen von 150 °C aus.

### III Herstellung hydrierter Nitrilkautschuke HNBR 1 und HNBR 2 durch Hydrierung

Der als Ausgangsmaterial für die Hydrierung verwendete Nitrilkautschuk "NBR" enthielt Wiederholungseinheiten von Acrylnitril, Butadien sowie mit einem Hydroxylgruppen-haltigen Monomer (NBR 1) bzw. ohne (NBR 2, Vergleichsversuch) in den in der nachfolgenden Tabelle 15 angegebenen Mengen. Er hatte eine Mooney-Viskosität, wie sie in Tabelle 15 angegeben ist.

**Tabelle 15: Zur Hydrierung eingesetzte NBR 1 (erfindungsgemäß) und NBR 2 (Vergleich)**

| **NBR** | **Butadien-Gehalt [Gew.-%]** | **Termonomer** | **Termonomer Gehalt [Gew.-%]** | **ACN-Gehalt [Gew.-%]** | **Mooney-Viskosität (ML 1+4 at 100°C)** |
|---|---|---|---|---|---|
| NBR 1 | 58,3 | Hydroxyethylenglykolmethacrylat | 5,3 | 36,4 | 34 |
| NBR 2 | 65,5 | --- | 0 | 34,5 | 27,4 |

In einem Hochdruckreaktor wurde eine Lösung des NBR 1 bzw. NBR 2 mit einem Feststoffgehalt von 12 % in Monochlorbenzol ("MCB") als Lösungsmittel vorgelegt und auf 138°C unter Rühren bei 600/min erwärmt. Nach Einstellen einer stabilen Temperatur wurde eine Lösung von 0,06 phr Wilkinson-Katalysator und 1,0 phr Triphenylphosphin ("TPP") in MCB als Cokatalysator eingeführt und Wasserstoff wurde in den Reaktor eingeführt bis zu einem Druck von 85 bar. Das Reaktionsgemisch wurde für 4 Stunden gerührt, worauf der Wasserstoffdruck abgelassen und der Reaktor auf etwa 22°C abgekühlt wurde. Die Polymerlösung wurde dann aus dem Reaktor ausgetragen und unter Verwendung von Dampf koaguliert nach bekanntem Verfahren. Das isolierte Polymer wurde anschließend getrocknet.

### IV Herstellung der vulkanisierbaren Zusammensetzungen

Die in Tabelle 16 angegebenen Komponenten der vulkanisierbaren Zusammensetzung wurden in einem Banbury-Mischer durch herkömmliches Vermischen wie bereits oben beschrieben gemischt. Die Polymerzusammensetzung wurde dann bei 180°C für 20 Minuten vulkanisiert und für 4 Stunden bei 175°C getempert.

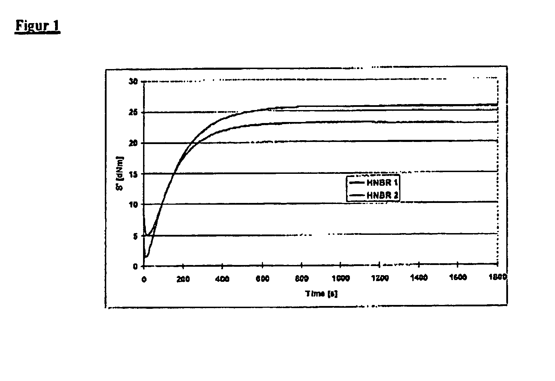

Die Eigenschaften der HNBR-Vulkanisate, wie sie in Tabellen 17 und 18 wiedergegeben und in Figur 1 dargestellt, zeigen die Überlegenheit bezüglich der Vernetzungsdichte, einem erhöhten Modul 100 und der erhöhten Zugfestigkeit von HNBR 1 im Vergleich zu HNBR 2. Dies führt zu signifikanten praktischen Vorteilen in unterschiedlichen dynamischen Anwendungen, wie Förderband und Abdichtungsanwendungen, wo erhöhte dynamische Eigenschaften von den Vulkanisaten gefordert werden.

**Tabelle 16: Formulierung der vulkanisierbaren Zusammensetzungen, Beispiele Q1-2**

| **Beispiel** | **Q1** | **Q2** |
|---|---|---|
| **Kautschukkomponente** | **Teile** | **Teile** |
| **HNBR 1** | 100 | |
| **HNBR 2** | | 100 |
| **Weitere Komponenten** | **phr*** | **phr*** |
| **CORAX^{®} N550** | 50 | 50 |
| **MAGLITE^{®} DE** | 2 | 2 |
| **VULKANOX^{®} ZMB2/C5** | 0,4 | 0,4 |
| **DIPLAST^{®} TM 8-10/ST** | 5 | 5 |
| **LUVOMAXX^{®} CDPA** | 1 | 1 |
| **ADDOLINK^{®} TT** | 8 | - |
| **TAIC 70** | - | 2,1 |
| **PERKADOX^{®} 14-40** | - | 7 |

In Tabelle 16 sind die Mengen aller anderen Komponenten in "phr" angegeben, d.h. GewichtsTeilen pro 100 Teilen Kautschukkomponente

**Tabelle 17: HNBR-Vulkanisate Q1 und Q2; Physikalische Eigenschaften**

| **Beispiel** | | **Q1** | **Q2** |
|---|---|---|---|
| **Härte ShA** | **[Shore A]** | 77 | 68 |
| **M10** | **MPa** | 0,9 | 0,6 |
| **M25** | **MPa** | 1,8 | 1,1 |
| **M50** | **MPa** | 3,8 | 1,9 |
| **M100** | **MPa** | 12,1 | 5,0 |
| **EB** | **%** | 199 | 236 |
| **TS** | **MPa** | 27,6 | 21,4 |

**Tabellen 18: HNBR-Vulkanisate Q1 und Q2; MDR-Werte bei 180°C**

| **MDR 180°C** | | **Q1** | **Q2** |
|---|---|---|---|
| **S min** | **[dNm]** | 5,05 | 1,49 |
| **S max** | **[dNm]** | 25,69 | 23,08 |
| **Delta S** | **dNm** | 20,64 | 21,59 |
| **TS2** | **s** | 57,6 | 36 |
| **t50** | **s** | 160,35 | 118,13 |
| **t90** | **s** | 393,36 | 329,43 |
| **t95** | **s** | 494,28 | 424,22 |

**Figur 1** zeigt den MDR bei 180°C für die HNBR-Vulkanisate der Beispiele Q1 und Q2. HNBR 1 ist die in Figur 1 oben verlaufende Kurve, die Kurve von HNBR 2 verläuft unterhalb

## Patentansprüche

1. Vulkanisierbare Zusammensetzung enthaltend mindestens einen Hydroxylgruppen-haltigen (H)NBR-Kautschuk und mindestens eine Verbindung der allgemeinen Formel (I) als Vernetzer, 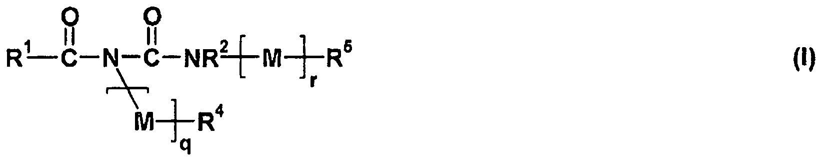 worin
R¹ O-[M]ₚ-R³, NH-[M]ₚ-R³
R² H
oder R¹ und R² gemeinsam eine Einfachbindung oder eine der folgenden Gruppen 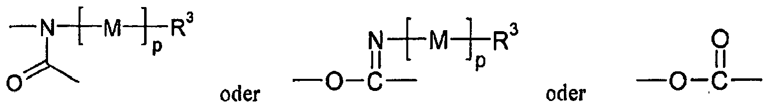 ergeben,
wobei in der allgemeinen Formel (I)
**R³, R⁴, R⁵** jeweils gleich oder verschieden sind und H oder einen Rest bedeuten, der eine oder mehrere der nachfolgenden Gruppen enthält, einen gesättigten, ein- oder mehrfach ungesättigten Carbo- oder Heterocyclylrest, geradkettiges oder verzweigtes Alkyl, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Sulfanyl, Hydroperoxycarbonyl, Hydroperoxy, Thiocarboxy, Dithiocarboxy, Hydroxymino, Nitro, Nitrosyl, Carbonyl, Carboxy, Oxycarbonyl, Oxysulfonyl, Oxo, Thioxo, Borat, Selenat, Epoxy, Cyanat, Thiocyanat, Isocyanat, Thioisocyanat oder Isocyanid,
M für Wiederholungseinheiten eines oder mehrerer, ein- oder mehrfach ungesättigter Monomeren, umfassend konjugierte oder nicht-konjugierte Diene, Alkine und Vinylverbindungen, steht oder für ein divalentes Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide, und
p, q, r gleich oder verschieden sind und im Bereich von 0 bis 10.000 liegen,
und wobei die Verbindung der allgemeinen Formel (I) mindestens zwei Isocyanatgruppen enthält und
die Verbindung der allgemeinen Formel (I) mindestens eine Allophanat-, Biuret-, Uretdion-, Uretonimin-, verbrückte Carbamat-, Carbodiimid-, Isocyanurat-, Iminooxadiazindion-oder Oxadiazintrion-Struktur aufweist, wobei der (H)NBR-Kautschuk Wiederholungseinheiten, abgeleitet von mindestens einem konjugierten Dien, mindestens einem α,β-ungesättigten Nitril, mindestens einem copolymerisierbaren Hydroxylgruppen-haltigen Monomer und gegebenenfalls einem oder mehreren weiteren copolymerisierbaren Monomeren aufweist und die C=C Doppelbindungen im Fall des HNBR ganz oder teilweise hydriert sind, **dadurch gekennzeichnet, dass** im (H)NBR-Kautschuk das copolymerisierbare Hydroxylgruppen-haltige Monomer ausgewählt ist aus der Gruppe bestehend aus Hydroxyalkyl(meth)acrylaten.

2. Vulkanisierbare Zusammensetzung nach Anspruch 1, **dadurch gekennzeichnet, dass** eine oder mehrere Verbindungen der allgemeinen Formeln (1-1) bis (I-6) als Vernetzer eingesetzt werden, 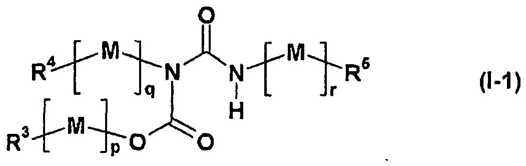 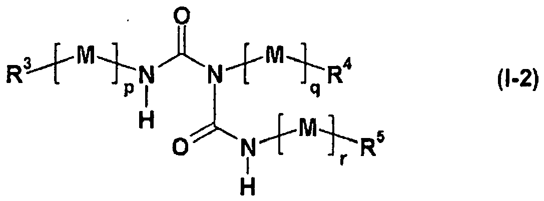 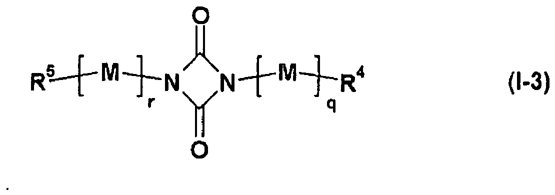 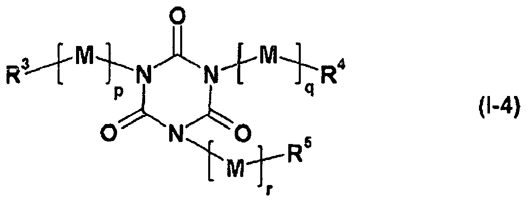 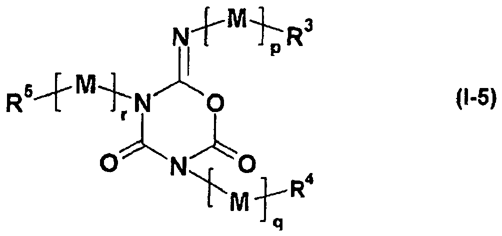 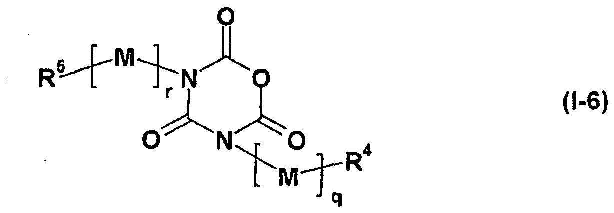 wobei in den allgemeinen Formeln (I-1) bis (I-6) die Reste R¹, R², R³, R⁴, R⁵ und M sowie p, q, r die gleichen Bedeutungen besitzen wie in Anspruch 1.

3. Vulkanisierbare Zusammensetzung nach Anspruch 1 oder 2, **dadurch gekennzeichnet, dass** es sich bei der Verbindung der allgemeinen Formel (I) um Dimere oder Trimere von Diisocyanaten handelt.

4. Vulkanisierbare Zusammensetzung nach einem der Ansprüche 1 bis 3, **dadurch gekennzeichnet, dass** der Vernetzer in Abwesenheit zinnhaltiger Verbindungen eingesetzt wird.

5. Vulkanisierbare Zusammensetzung nach einem der Ansprüche 1 bis 4, **dadurch gekennzeichnet, dass** im (H)NBR-Kautschuk zusätzlich Wiederholungseinheiten eines copolymerisierbaren vernetzenden Monomeren vorliegen.

6. Vulkanisierbare Zusammensetzung nach Anspruch 5, **dadurch gekennzeichnet, dass** das copolymerisierbare vernetzende Monomer ein Triacrylat ist.

7. Vulkanisierbare Zusammensetzung nach einem der Ansprüche 1 bis 6, **dadurch gekennzeichnet, dass** sie frei von zinnhaltigen Verbindungen ist.

8. Verfahren zur Herstellung von vulkanisierbaren Zusammensetzungen nach einem der Ansprüche 1 bis 7 durch Vermischen mindestens eines Hydroxylgruppen-haltigen (H)NBR-Kautschuks und mindestens einen Vernetzer, wie in einem der Ansprüche 1 bis 7 definiert.

9. Verfahren zur Herstellung von Vulkanisaten, **dadurch gekennzeichnet, dass** die vulkanisierbare Zusammensetzung nach einem der Ansprüche 1 bis 7 unter Erwärmen vernetzt wird.

10. Vulkanisate, bevorzugt Formteile, erhältlich durch das Verfahren nach Anspruch 9.

11. Verwendung von Verbindungen der allgemeinen Formel (I) als Vernetzer für Hydroxylgruppen-haltige (H)NBR Kautschuke, 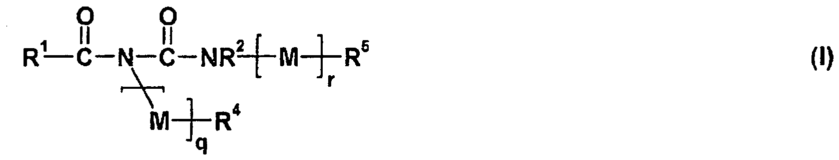 worin
R¹ O-[M]ₚ-R³, NH-[M]ₚ-R³
R² H
oder R¹ und R² gemeinsam eine Einfachbindung oder eine der folgenden Gruppen 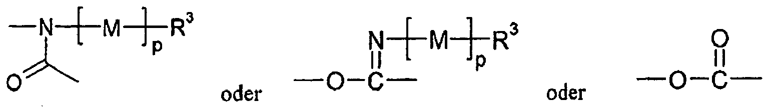 ergeben,
wobei in der allgemeinen Formel (I)
**R³, R⁴, R⁵** jeweils gleich oder verschieden sind und H oder einen Rest bedeuten, der eine oder mehrere der nachfolgenden Gruppen enthält, einen gesättigten, ein- oder mehrfach ungesättigten Carbo- oder Heterocyclylrest, geradkettiges oder verzweigtes Alkyl, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Sulfanyl, Hydroperoxycarbonyl, Hydroperoxy, Thiocarboxy, Dithiocarboxy, Hydroxyimino, Nitro, Nitrosyl, Carbonyl, Carboxy, Oxycarbonyl, Oxysulfonyl, Oxo, Thioxo, Borat, Selenat, Epoxy, Cyanat, Thiocyanat, Isocyanat, Thioisocyanat oder Isocyanid,
**M** für Wiederholungseinheiten eines oder mehrerer, ein- oder mehrfach ungesättigter Monomeren, umfassend konjugierte oder nicht-konjugierte Diene, Alkine und Vinylverbindungen, steht oder für ein divalentes Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamid, und
**p, q, r** gleich oder verschieden sind und im Bereich von 0 bis 10.000 liegen,
und wobei die Verbindungen der allgemeinen Formel (I) jeweils mindestens zwei Isocyanatgruppen enthalten und mindestens eine Allophanat-, Biuret-, Uretdion-, Uretonimin-, verbrückte Carbamat-, Carbodiimid-, Isocyanurat-, Iminooxadiazindion- oder Oxadiazintrion-Struktur und wobei der (H)NBR-Kautschuk Wiederholungseinheiten, abgeleitet von mindestens einem konjugierten Dien, mindestens einem α,β-ungesättigten Nitril, mindestens einem copolymerisierbaren Hydroxylgruppen-haltigen Monomer und gegebenenfalls einem oder mehreren weiteren copolymerisierbaren Monomeren aufweist und die C=C Doppelbindungen im Fall des HNBR ganz oder teilweise hydriert sind, **dadurch gekennzeichnet, dass** im (H)NBR-Kautschuk das copolymerisierbare Hydroxylgruppen-haltige Monomer ausgewählt ist aus der Gruppe bestehend aus Hydroxyalkyl(meth)acrylaten.

12. Verwendung nach Anspruch 11, **dadurch gekennzeichnet, dass** eine oder mehrere Verbindungen der allgemeinen Formeln (I-1) bis (I-6) als Vernetzer eingesetzt werden, 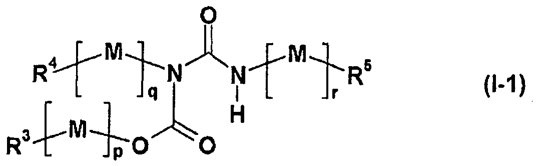 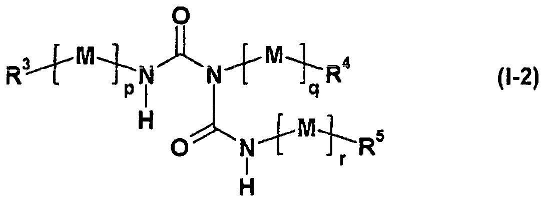 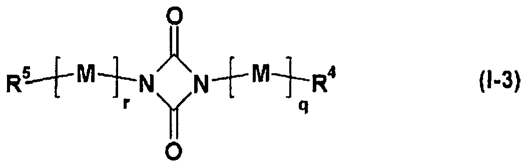 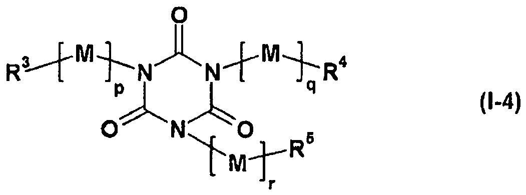 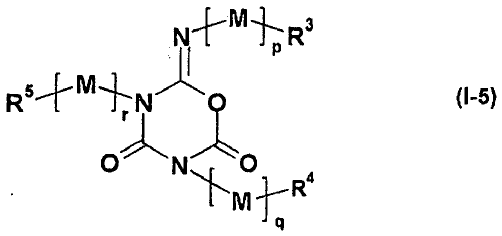 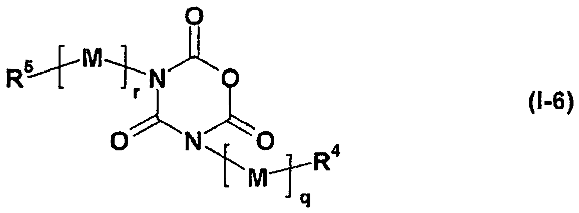 wobei in den allgemeinen Formeln (I-1) bis (I-6) die Reste R¹, R², R³, R⁴, R⁵ und M sowie p, q, r die gleichen Bedeutungen besitzen wie in Anspruch 1.

13. Verwendung nach einem der Ansprüche 11 bis 12, **dadurch gekennzeichnet, dass** es sich bei der Verbindung der allgemeinen Formel (I) um Dimere oder Trimere von Diisocyanaten handelt.

14. Verwendung nach einem der Ansprüche 11 bis 13, **dadurch gekennzeichnet, dass** der Vernetzer in Abwesenheit zinnhaltiger Verbindungen eingesetzt wird.

## Claims

1. Vulcanizable composition comprising at least one hydroxyl group-containing (H)NBR rubber and at least one compound of the general formula (I) as cross-linker, 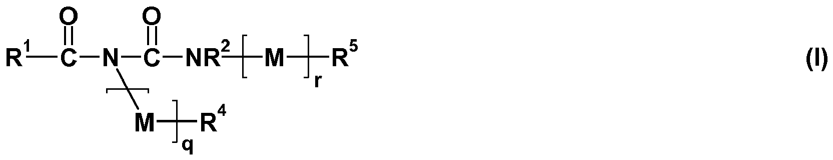 wherein
R¹ is O-[M]ₚ-R³, NH-[M]ₚ-R³
R² is H
or R¹ and R² together yield a single bond or one of the following groups 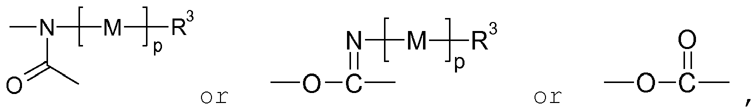 where in the general formula (I)
**R³, R⁴, R⁵** are in each case identical or different and denote H or a radical that contains one or more of the following groups,
a saturated, mono- or polyunsaturated carbo- or heterocyclyl radical, straight-chain or branched alkyl, aryl, heteroaryl, arylalkyl, heteroarylalkyl, alkoxy, aryloxy, heteroaryloxy, amino, amido, hydroxyimino, carbamoyl, alkoxycarbonyl, F, Cl, Br, I, hydroxyl, phosphonato, phosphinato, alkylthio, arylthio, sulphanyl, thiocarboxy, sulphinyl, sulphono, sulphino, sulpheno, sulphonic acids, sulphamoyl, silyl, silyloxy, nitrile, sulphanyl, hydroperoxycarbonyl, hydroperoxy, thiocarboxy, dithiocarboxy, hydroxyimino, nitro, nitrosyl, carbonyl, carboxy, oxycarbonyl, oxysulphonyl, oxo, thioxo, borate, selenate, epoxy, cyanate, thiocyanate, isocyanate, thioisocyanate or isocyanide,
**M** represents repeating units of one or more mono- or polyunsaturated monomers, comprising conjugated or non-conjugated dienes, alkynes and vinyl compounds, or represents a divalent structural element, which is derived from polymers comprising polyethers, especially polyalkylene glycol ethers and polyalkylene oxides, polysiloxanes, polyols, polycarbonates, polyurethanes, polyisocyanates, polysaccharides, polyesters and polyamides, and
**p, q, r** are identical or different and lie in the range from 0 to 10 000,
and where the compound of the general formula (I) contains at least two isocyanate groups and
the compound of the general formula (I) has at least one allophanate, biuret, uretdione, uretonimine, bridged carbamate, carbodiimide, isocyanurate, iminooxadiazinedione or oxadiazinetrione structure, where the (H)NBR rubber has repeating units, derived from at least one conjugated diene, at least one α,β-unsaturated nitrile, at least one copolymerizable hydroxyl group-containing monomer and optionally one or more other copolymerizable monomers and the C=C double bonds in the case of the HNBR are completely or partially hydrogenated, **characterized in that** in the (H)NBR rubber the copolymerizable hydroxyl group-containing monomer is selected from the group consisting of hydroxyalkyl (meth)acrylates.

2. Vulcanizable composition according to Claim 1, **characterized in that** one or more compounds of the general formulae (I-1) to (I-6) are employed as cross-linkers, 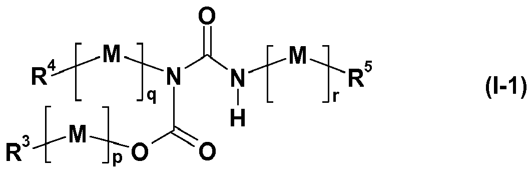 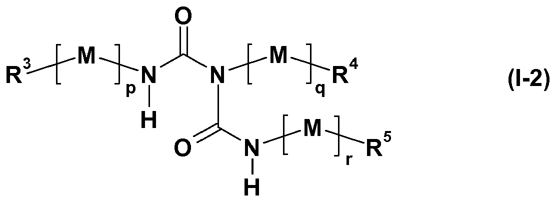 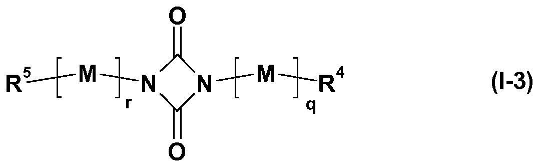 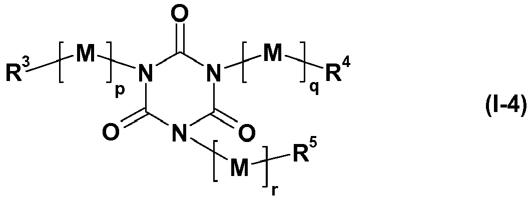 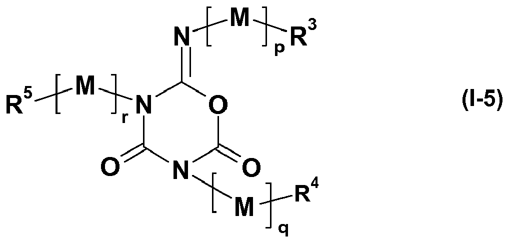 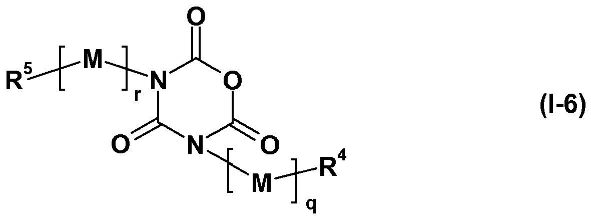 where in the general formulae (I-1) to (I-6) the radicals R¹, R², R³, R⁴, R⁵ and M and also p, q, r have the same meanings as in Claim 1.

3. Vulcanizable composition according to Claim 1 or 2, **characterized in that** the compound of the general formula (I) is a dimer or trimer of diisocyanates.

4. Vulcanizable composition according to one of Claims 1 to 3, **characterized in that** the cross-linker is employed in the absence of tin-containing compounds.

5. Vulcanizable composition according to one of Claims 1 to 4, **characterized in that** repeating units of a copolymerizable cross-linking monomer are additionally present in the (H)NBR rubber.

6. Vulcanizable composition according to Claim 5, **characterized in that** the copolymerizable cross-linking monomer is a triacrylate.

7. Vulcanizable composition according to one of Claims 1 to 6, **characterized in that** it is free of tin-containing compounds.

8. Process for the production of vulcanizable compositions according to one of Claims 1 to 7 by mixing at least one hydroxyl group-containing (H)NBR rubber and at least one cross-linker, as defined in one of Claims 1 to 7.

9. Process for the production of vulcanizates, **characterized in that** the vulcanizable composition according to one of Claims 1 to 7 is cross-linked with warming.

10. Vulcanizates, preferably moulded parts, obtainable by the process according to Claim 9.

11. Use of compounds of the general formula (I) as cross-linkers for hydroxyl group-containing (H)NBR rubbers, 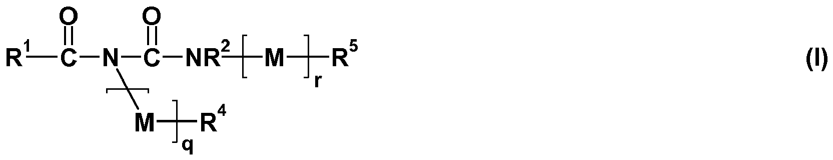 wherein
R¹ is O-[M]ₚ-R³, NH-[M]ₚ-R³
R² is H
or R¹ and R² together yield a single bond or one of the following groups 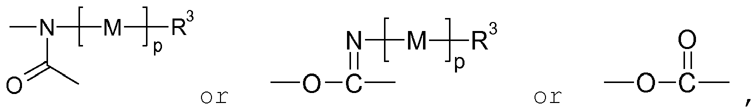 where in the general formula (I)
**R³, R⁴, R⁵** are in each case identical or different and denote H or a radical that contains one or more of the following groups,
a saturated, mono- or polyunsaturated carbo- or heterocyclyl radical, straight-chain or branched alkyl, aryl, heteroaryl, arylalkyl, heteroarylalkyl, alkoxy, aryloxy, heteroaryloxy, amino, amido, hydroxyimino, carbamoyl, alkoxycarbonyl, F, Cl, Br, I, hydroxyl, phosphonato, phosphinato, alkylthio, arylthio, sulphanyl, thiocarboxy, sulphinyl, sulphono, sulphino, sulpheno, sulphonic acids, sulphamoyl, silyl, silyloxy, nitrile, sulphanyl, hydroperoxycarbonyl, hydroperoxy, thiocarboxy, dithiocarboxy, hydroxyimino, nitro, nitrosyl, carbonyl, carboxy, oxycarbonyl, oxysulphonyl, oxo, thioxo, borate, selenate, epoxy, cyanate, thiocyanate, isocyanate, thioisocyanate or isocyanide,
**M** represents repeating units of one or more mono- or polyunsaturated monomers, comprising conjugated or non-conjugated dienes, alkynes and vinyl compounds, or represents a divalent structural element, which is derived from polymers comprising polyethers, especially polyalkylene glycol ethers and polyalkylene oxides, polysiloxanes, polyols, polycarbonates, polyurethanes, polyisocyanates, polysaccharides, polyesters and polyamides, and
**p, q, r** are identical or different and lie in the range from 0 to 10 000,
and where the compounds of the general formula (I) in each case contain at least two isocyanate groups and at least one allophanate, biuret, uretdione, uretonimine, bridged carbamate, carbodiimide, isocyanurate, iminooxadiazinedione or oxadiazinetrione structure, and where the (H)NBR rubber has repeating units, derived from at least one conjugated diene, at least one α,β-unsaturated nitrile, at least one copolymerizable hydroxyl group-containing monomer and optionally one or more other copolymerizable monomers and the C=C double bonds in the case of the HNBR are completely or partially hydrogenated, **characterized in that** in the (H)NBR rubber the copolymerizable hydroxyl group-containing monomer is selected from the group consisting of hydroxyalkyl (meth)acrylates.

12. Use according to Claim 11, **characterized in that** one or more compounds of the general formulae (I-1) to (1-6) are employed as cross-linkers, 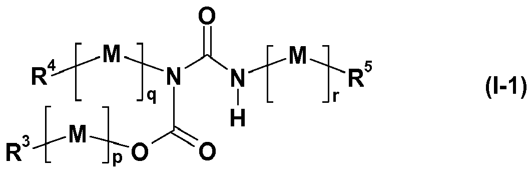 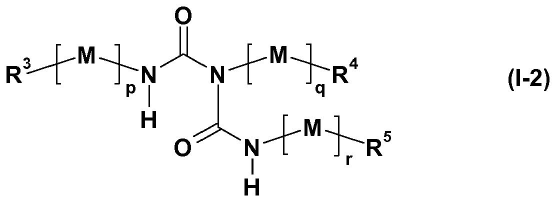 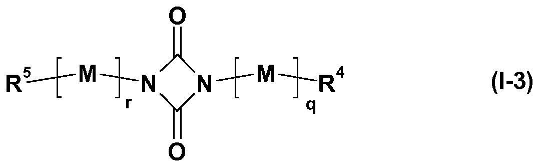 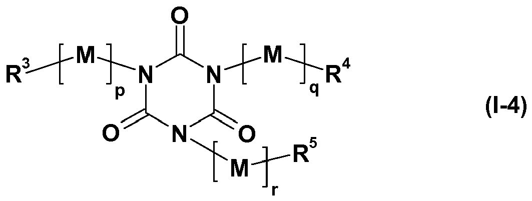 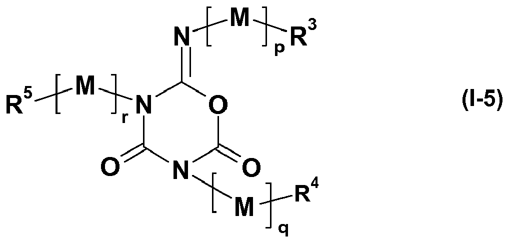 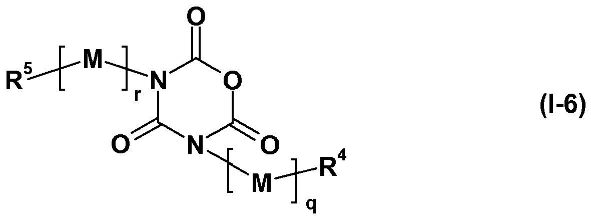 where in the general formulae (I-1) to (I-6) the radicals R¹, R², R³, R⁴, R⁵ and M and also p, q, r have the same meanings as in Claim 1.

13. Use according to one of Claims 11 to 12, **characterized in that** the compound of the general formula (I) is a dimer or trimer of diisocyanates.

14. Use according to one of Claims 11 to 13, **characterized in that** the cross-linker is employed in the absence of tin-containing compounds.

## Revendications

1. Composition vulcanisable contenant au moins un caoutchouc (H)NBR contenant des groupes hydroxyle et au moins un composé de formule générale (I) en tant qu'agent de réticulation 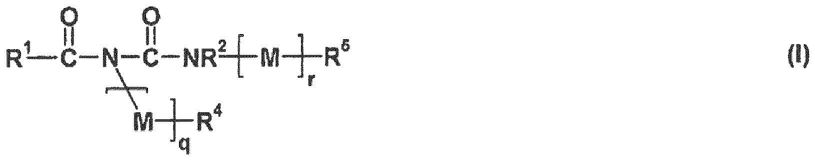 dans laquelle
R¹ représente O-[M]ₚ-R³, NH-[M]ₚ-R³,
R² représente H,
ou R¹ et R² forment ensemble une simple liaison ou un des groupes suivants 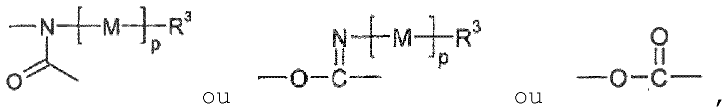 dans la formule générale (I)
R³, R⁴, R⁵ étant à chaque fois identiques ou différents et signifiant H ou un radical qui contient un ou plusieurs des groupes suivants
un radical carbo- ou hétérocyclyle saturé, mono- ou polyinsaturé, alkyle linéaire ou ramifié, aryle, hétéroaryle, arylalkyle, hétéroarylalkyle, alcoxy,
aryloxy, hétéroaryloxy, amino, amido, hydroxyimino, carbamoyle, alcoxycarbonyle, F, Cl, Br, I, hydroxy, phosphonato, phosphinato, alkylthio, arylthio, sulfanyle, thiocarboxy, sulfinyle, sulfono, sulfino, sulféno, acides sulfoniques, sulfamoyle, silyle, silyloxy, nitrile, sulfanyle, hydroperoxycarbonyle, hydroperoxy, thiocarboxy, dithiocarboxy, hydroxyimino, nitro, nitrosyle, carbonyle, carboxy, oxycarbonyle, oxysulfonyle, oxo, thioxo, borate, sélénate, époxy, cyanate, thiocyanate, isocyanate, thioisocyanate ou isocyanure,
M représentant des unités de répétition d'un ou de plusieurs monomères mono- ou polyinsaturés, comprenant les diènes conjugués ou non conjugués, les alcynes et les composés de vinyle, ou représentant un élément structural bivalent qui dérive de polymères comprenant les polyéthers, notamment les éthers de polyalkylène glycol et les oxydes de polyalkylène, les polysiloxanes, les polyols, les polycarbonates, les polyuréthanes, les polyisocyanates, les polysaccharides, les polyesters et les polyamides, et
p, q, r étant identiques ou différents et se situant dans la plage allant de 0 à 10 000,
et le composé de formule générale (I) contenant au moins deux groupes isocyanate, et
le composé de formule générale (I) comprenant au moins une structure allophanate, biuret, uretdione, urétonimine, carbamate ponté, carbodiimide, isocyanurate, iminooxadiazinedione ou oxadiazinetrione, le caoutchouc (H)NBR comprenant des unités de répétition dérivées d'au moins un diène conjugué, d'au moins un nitrile α,β-insaturé, d'au moins un monomère contenant des groupes hydroxyle copolymérisable et éventuellement d'un ou de plusieurs monomères copolymérisables supplémentaires, et les doubles liaisons C=C étant totalement ou partiellement hydrogénées dans le cas de l'HNBR, **caractérisée en ce que** le monomère contenant des groupes hydroxyle copolymérisable dans le caoutchouc (H)NBR est choisi dans le groupe constitué par les (méth)acrylates d'hydroxyalkyle.

2. Composition vulcanisable selon la revendication 1, **caractérisée en ce qu'**un ou plusieurs composés des formules générales (I-1) à (1-6) sont utilisés en tant qu'agents de réticulation 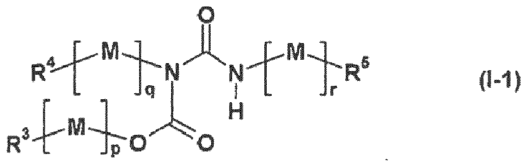 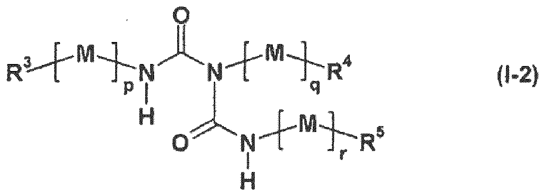 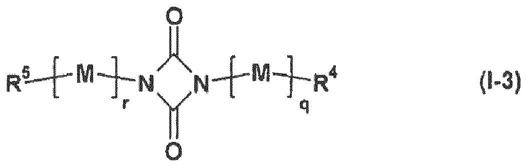 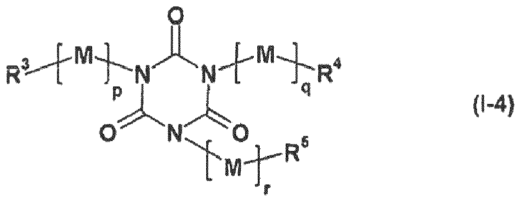 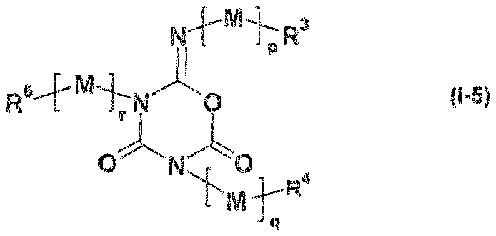 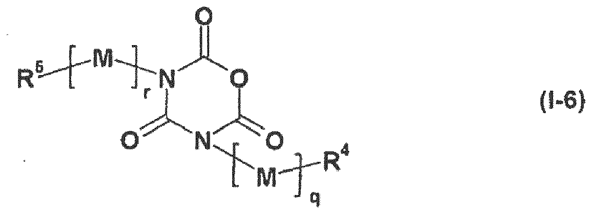 dans les formules générales (I-1) à (I-6), les radicaux R¹, R², R³, R⁴, R⁵ et M, ainsi que p, q, r présentant les mêmes significations que dans la revendication 1.

3. Composition vulcanisable selon la revendication 1 ou 2, **caractérisée en ce que** le composé de formule générale (I) consiste en des dimères ou des trimères de diisocyanates.

4. Composition vulcanisable selon l'une quelconque des revendications 1 à 3, **caractérisée en ce que** l'agent de réticulation est utilisé en l'absence de composés contenant de l'étain.

5. Composition vulcanisable selon l'une quelconque des revendications 1 à 4, **caractérisée en ce que** des unités de répétition d'un monomère réticulant copolymérisable sont également présentes dans le caoutchouc (H)NBR.

6. Composition vulcanisable selon la revendication 5, **caractérisée en ce que** le monomère réticulant copolymérisable est un triacrylate.

7. Composition vulcanisable selon l'une quelconque des revendications 1 à 6, **caractérisée en ce qu'**elle est exempte de composés contenant de l'étain.

8. Procédé de fabrication de compositions vulcanisables selon l'une quelconque des revendications 1 à 7 par mélange d'au moins un caoutchouc (H)NBR contenant des groupes hydroxyle et d'au moins un agent de réticulation tel que défini dans l'une quelconque des revendications 1 à 7.

9. Procédé de fabrication de vulcanisats, **caractérisé en ce que** la composition vulcanisable selon l'une quelconque des revendications 1 à 7 est réticulée par chauffage.

10. Vulcanisats, de préférence pièces moulées, pouvant être obtenus par le procédé selon la revendication 9.

11. Utilisation de composés de formule générale (I) en tant qu'agent de réticulation pour caoutchoucs (H)NBR contenant des groupes hydroxyle 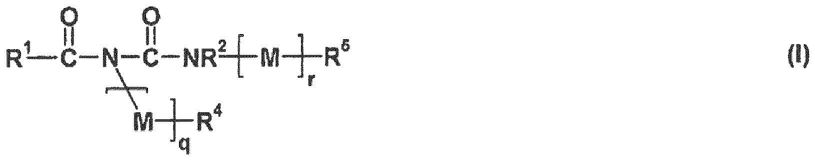 dans laquelle
R¹ représente O-[M]ₚ-R³, NH-[M]ₚ-R³
R² représente H
ou R¹ et R² forment ensemble une simple liaison ou un des groupes suivants 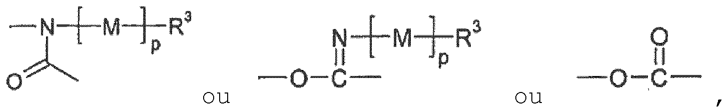 dans la formule générale (I)
R³, R⁴, R⁵ étant à chaque fois identiques ou différents et signifiant H ou un radical qui contient un ou plusieurs des groupes suivants
un radical carbo- ou hétérocyclyle saturé, mono- ou polyinsaturé, alkyle linéaire ou ramifié, aryle, hétéroaryle, arylalkyle, hétéroarylalkyle, alcoxy, aryloxy, hétéroaryloxy, amino, amido, hydroxyimino,
carbamoyle, alcoxycarbonyle, F, Cl, Br, I, hydroxy, phosphonato, phosphinato, alkylthio, arylthio, sulfanyle, thiocarboxy, sulfinyle, sulfono, sulfino, sulféno, acides sulfoniques, sulfamoyle, silyle, silyloxy, nitrile, sulfanyle, hydroperoxycarbonyle, hydroperoxy, thiocarboxy, dithiocarboxy, hydroxyimino, nitro, nitrosyle, carbonyle, carboxy, oxycarbonyle, oxysulfonyle, oxo, thioxo, borate, sélénate, époxy, cyanate, thiocyanate, isocyanate, thioisocyanate ou isocyanure,
M représentant des unités de répétition d'un ou de plusieurs monomères mono- ou polyinsaturés, comprenant les diènes conjugués ou non conjugués, les alcynes et les composés de vinyle, ou représentant un élément structural bivalent qui dérive de polymères comprenant les polyéthers, notamment les éthers de polyalkylène glycol et les oxydes de polyalkylène, les polysiloxanes, les polyols, les polycarbonates, les polyuréthanes, les polyisocyanates, les polysaccharides, les polyesters et les polyamides, et
p, q, r étant identiques ou différents et se situant dans la plage allant de 0 à 10 000,
et les composés de formule générale (I) contenant à chaque fois au moins deux groupes isocyanate, et au moins une structure allophanate, biuret, uretdione, urétonimine, carbamate ponté, carbodiimide, isocyanurate, iminooxadiazinedione ou oxadiazinetrione, et le caoutchouc (H)NBR comprenant des unités de répétition dérivées d'au moins un diène conjugué, d'au moins un nitrile α,β-insaturé, d'au moins un monomère contenant des groupes hydroxyle copolymérisable et éventuellement d'un ou de plusieurs monomères copolymérisables supplémentaires, et les doubles liaisons C=C étant totalement ou partiellement hydrogénées dans le cas de l'HNBR, **caractérisée en ce que** le monomère contenant des groupes hydroxyle copolymérisable dans le caoutchouc (H)NBR est choisi dans le groupe constitué par les (méth)acrylates d'hydroxyalkyle.

12. Utilisation selon la revendication 11, **caractérisée en ce qu'**un ou plusieurs composés des formules générales (I-1) à (1-6) sont utilisés en tant qu'agent de réticulation 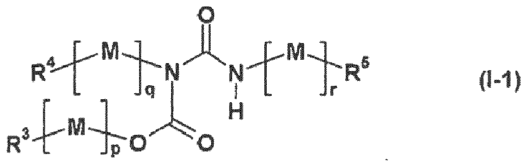 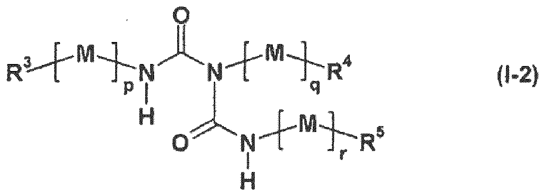 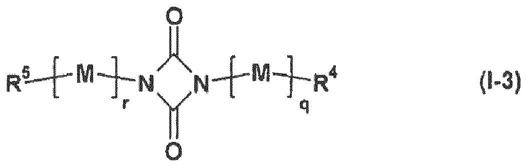 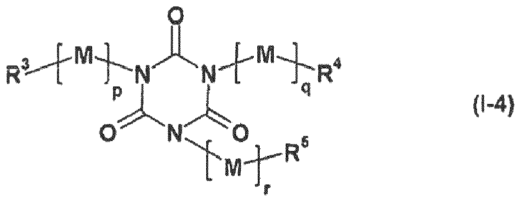 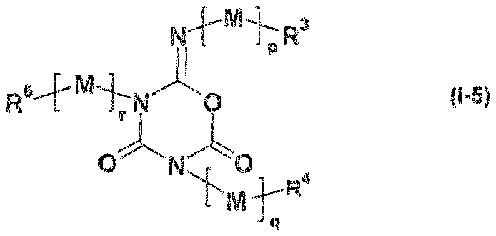 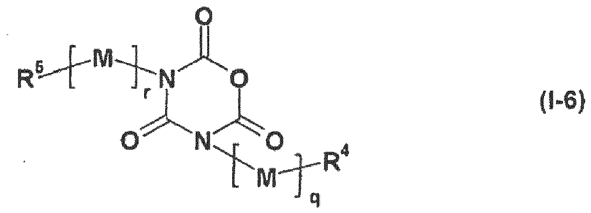 dans les formules générales (I-1) à (I-6), les radicaux R¹, R², R³, R⁴, R⁵ et M, ainsi que p, q, r présentant les mêmes significations que dans la revendication 1.

13. Utilisation selon l'une quelconque des revendications 11 à 12, **caractérisée en ce que** le composé de formule générale (I) consiste en des dimères ou des trimères de diisocyanates.

14. Utilisation selon l'une quelconque des revendications 11 à 13, **caractérisée en ce que** l'agent de réticulation est utilisé en l'absence de composés contenant de l'étain.
